(19) Europäisches Patentamt
European Patent Office
Office européen des brevets

(11) **EP 1 418 444 B1**

(12) **EUROPÄISCHE PATENTSCHRIFT**

(45) Veröffentlichungstag und Bekanntmachung des Hinweises auf die Patenterteilung:
**05.01.2011 Patentblatt 2011/01**

(51) Int Cl.:
*G01S 17/93* *(2006.01)*     *G01S 13/93* *(2006.01)*

(21) Anmeldenummer: **03021201.3**

(22) Anmeldetag: **18.09.2003**

(54) **Verfahren zur Bestimmung einer Eigenbewegung eines Fahrzeugs**

Method for determining the yaw rate of a vehicle

Procédé pour déterminer la vitesse de lacet d'un véhicule

(84) Benannte Vertragsstaaten:
**AT BE BG CH CY CZ DE DK EE ES FI FR GB GR HU IE IT LI LU MC NL PT RO SE SI SK TR**

(30) Priorität: **11.11.2002 DE 10252323**

(43) Veröffentlichungstag der Anmeldung:
**12.05.2004 Patentblatt 2004/20**

(73) Patentinhaber: **SICK AG
79183 Waldkirch (DE)**

(72) Erfinder:
• **Lages, Ulrich, Dr.
D-21031 Hamburg (DE)**

• **Fürstenberg, Kay
D-89075 Ulm (DE)**
• **Eisenlauer, Stephan
D-89075 Ulm (DE)**
• **Dietmayer, Klaus, Dr.
89075 Ulm (DE)**

(74) Vertreter: **Manitz, Finsterwald & Partner GbR
Postfach 31 02 20
80102 München (DE)**

(56) Entgegenhaltungen:
**EP-A- 0 514 343     EP-A- 0 899 543
WO-A-01/50154     US-A- 5 930 739**

**Beschreibung**

Die vorliegende Erfindung betrifft ein Verfahren zur Bestimmung einer Eigenbewegung eines Fahrzeugs.

Für viele Verfahren zur Steuerung eines Kraftfahrzeugs ist es wichtig, dessen Eigenbewegung auf einer Fahrbahn bzw. einem Untergrund bestimmen zu können.

Ein Beispiel hierfür ist eine elektronische Fahrdynamikregelung bzw. ein elektronisches Stabilitätsprogramm zur Regelung des Fahrverhaltens. Um die Geschwindigkeit und/oder Beschleunigung einzelner Räder eines Kraftfahrzeugs in Abhängigkeit von dem Fahrzustand regeln zu können, muss dieser sehr genau bekannt sein. Hierfür können Sensoren für die Raddrehung, den Lenkwinkel, die Gierrate und die Querbeschleunigung verwendet werden, die jedoch sinnvolle Daten nur in einem definierten Fahrzustand ohne Rutschen oder Schleudern liefern.

Die Kenntnis der Eigenbewegung ist weiterhin für eine automatische Erfassung der Umgebung eines Fahrzeugs mit Sensoren für elektromagnetische Strahlung wie zum Beispiel Videokameras, Laserscanner oder Radarsysteme wesentlich, da diese Sensoren am Fahrzeug befestigt und daher mit diesem mitbewegt sind. Um ortsfeste Gegenstände wie beispielsweise Leitpfosten oder Leitplanken von bewegten Gegenständen, z.B. anderen fahrenden Kraftfahrzeugen, einfach unterscheiden zu können, kann es wichtig sein, die Eigenbewegung des Fahrzeugs und damit des Sensors zu kennen.

WO O1/50154 A1 beschreibt ein Verfahren, bei dem von einem Radarsystem, das in Fahrtrichtung in der Mitte eines Kraftfahrzeugs montiert ist, Signale ausgesendet, von einem stehenden Objekt reflektierte Signale empfangen und ein relativer Winkel und ein relativer Abstand zwischen dem detektierten Objekt und einer Bezugsachse des Kraftfahrzeugs bestimmt werden, wobei ein Korrekturwert für den relativen Winkel bestimmt wird. Im Anschluss an die Bestimmung eines Korrekturwerts für die Winkelmessung des Radarsystems kann die Drehrate des Kraftfahrzeugs bestimmt werden. US 5,930,739 beschreibt ebenfalls ein Verfahren zur Messung der Drehrate eines Kraftfahrzeugs mittels eines optischen Sensors unter Zuhilfenahme eines stehenden Objekts.

Der vorliegenden Erfindung liegt daher die Aufgabe zugrunde, ein Verfahren zur Bestimmung einer Eigenbewegung eines Fahrzeugs anzugeben, mittels dessen die Eigenbewegung genau und auch in undefinierten Fahrzuständen bestimmbar ist.

Die Aufgabe wird gelöst durch ein Verfahren mit den Merkmalen des Anspruchs 1.

Das erfindungsgemäße Verfahren nutzt als eine Grundidee aus, dass eine Eigenbewegung eines Fahrzeugs gegenüber ortsfesten Gegenständen auch durch Analyse der Relativpositionen und -bewegungen der ortsfesten Gegenstände relativ zu dem Fahrzeug, d.h. in einem mit dem Fahrzeug mitbewegten Bezugssystem, zu einem Zeitpunkt erfolgen kann.

Unter ortsfesten Gegenständen werden dabei Gegenstände verstanden, die sich gegenüber dem Untergrund, auf dem sich das Fahrzeug bewegt, bzw. einem gegenüber diesem festen, unbewegten Weltbezugssystem und insbesondere auch zueinander nicht bewegen. Der Einfachheit halber werden auch Lebewesen, insbesondere Fußgänger, im Sinne der Erfindung als Gegenstände bezeichnet.

Die Eigenbewegung eines Fahrzeugs im Sinne der Erfindung kann sowohl eine Rotation des Fahrzeugs, die wenigstens eine Drehung einer vorgegebenen Richtung des Fahrzeugs umfasst, als auch eine Bewegung des Fahrzeugs entlang einer Bahn in dem Weltbezugssystem umfassen. Die Bewegung entlang der Bahn kann so definiert sein, dass ein eventuell durch die Lage des Mittelpunkts der Rotation bedingter Bahnanteil darin nicht mehr enthalten ist. Die Eigenbewegung kann insbesondere durch die Bahnbewegung eines relativ zu dem Fahrzeug fest angeordneten Referenzpunktes und eine Drehung einer ebenfalls relativ zu dem Fahrzeug fest orientierten Referenzrichtung beschrieben werden. Wenn der Referenzpunkt im Fahrzeugschwerpunkt liegt, wird die Drehbewegung auch als Gierbewegung bezeichnet. Weiterhin wird bei dem erfindungsgemäßen Verfahren von einer Bewegung des Fahrzeugs in einer ersten Ebene ausgegangen. Das Fahrzeug braucht sich dabei nicht tatsächlich auf einer Ebene zu bewegen. Unter der Bewegung in der ersten Ebene wird vielmehr die Projektion der Bahn des Fahrzeugs auf eine vorgebene erste Ebene verstanden, die vorzugsweise durch die Aufstandsflächen von wenigstens drei Rädern des Fahrzeugs definiert sein kann.

Bei einer Eigenbewegung des Fahrzeugs ergibt sich dann in Bezug auf das Fahrzeug bzw. Fahrzeugbezugssystem eine Relativbewegung der in dem Weltbezugssystem ortsfesten Gegenstände.

Da die Bewegung des Fahrzeugs in der ersten Ebene betrachtet wird, brauchen auch nur Daten in Bezug auf die Relativpositionen und -bewegungen in der zweiten Ebene verwendet zu werden, die zu der ersten Ebene parallel oder in einem Winkel kleiner als 90° geneigt ist. Die Daten über Relativpositionen und -bewegungen in der zweiten Ebene sind dann in entsprechende Daten in der ersten Ebene umrechenbar, wobei eine bekannte, beispielsweise durch zwei Winkel angebbare Orientierung der Ebenen zueinander benutzt werden kann. Alternativ kann auch eine Transformation in umgekehrter Richtung erfolgen.

Zur Analyse der Relativbewegung der Gegenstände werden wenigstens zwei Datensätze verwendet, die mittels eines mit dem Fahrzeug mitbewegten Sensors für elektromagnetische Strahlung erfasste Daten enthalten.

Bei dem Sensor kann es sich insbesondere um einen Sensor für sichtbares oder infrarotes Licht, beispielsweise einen Laserscanner mit einem radial geschwenkten Abtastbündel, wenigstens zwei Sensoren für sichtbares oder infrarotes Licht wie zum Beispiel Stereo-Videokameras oder Radarsensoren handeln.

Mittels des Sensors werden die Relativposition und/oder -bewegung von Gegenständen im Erfassungsbereich des Sensors überwacht. In Abhängigkeit von dem Typ des Sensors und der Größe des Gegenstands kann dabei der Gegenstand unter Umständen nur als Ganzer ohne weitere Differenzierung erfasst werden, oder es können einzelne Bereiche auf dem Gegenstand unterschieden werden.

Die Daten können dann unmittelbar durch den Sensor erfasste Sensordaten oder Daten umfassen, die erst durch eine Verarbeitung der Sensordaten, beispielsweise bei einer Objektverfolgung, erhalten wurden. Insbesondere können beispielsweise Daten in Bezug auf die Relativgeschwindigkeit aus Daten in Bezug auf die Relativposition zu zwei aufeinander folgenden Erfassungszeitpunkten und den zeitlichen Abstand der Erfassungszeitpunkt oder durch eine Objektverfolgung ermittelt werden.

Einem Gegenstand können mehrere Datensätze und damit Relativpositionen und -geschwindigkeiten zugeordnet sein, wenn sich die Daten auf die Relativposition und -bewegung von einzelnen Bereichen auf den Gegenstand beziehen. Vorzugsweise werden jedoch Daten in Bezug auf die Relativposition und -bewegung des ganzen Gegenstands, beispielsweise gegeben durch die Relativposition und -bewegung eines Bezugspunktes des Gegenstandes, verwendet.

Die Daten brauchen weiter insbesondere nur die Bestimmung der Relativpositionen und -bewegungen zuzulassen, müssen diese aber nicht unmittelbar enthalten. Insofern sind jedem Datensatz eine aus dessen Daten ableitbare Relativposition und eine Relativgeschwindigkeit zugeordnet.

Die Relativbewegungen werden dabei wenigstens über Relativgeschwindigkeiten der Gegenstände relativ zu dem Fahrzeug berücksichtigt, die die zeitliche Änderung der Relativpositionen beschreiben und insofern relative Bahngeschwindigkeiten der Gegenstände bzw. Gegenstandsbereiche wiedergeben.

Die Relativpositionen und -geschwindigkeiten können sich dabei zweckmäßig auf ein Fahrzeugbezugssystem beziehen, dessen Lage zum einen durch einen Referenzpunkt gegeben ist, der durch den Koordinatenursprung eines Sensorkoordinatensystems oder auch bevorzugt durch den Schwerpunkt des Fahrzeugs gegeben sein kann. Zum anderen kann die die Lage des Fahrzeugsbezugssystems definierende Referenzrichtung insbesondere durch eine Achse eines Sensorkoordinatensystems, bezüglich dessen der Sensor Positions- oder Geschwindigkeitsdaten ausgibt, eine andere Vorzugsrichtung des Sensors oder eine Achse eines fest mit dem Fahrzeug verbundenen und mit diesem mitbewegten Koordinatensystems gegeben sein.

Erfindungsgemäß betreffen diese Daten einen gegebenen Zeitpunkt, d. h. sie sind mit hinreichender Genauigkeit als zu einem Zeitpunkt erfasst anzusehen. Es ist daher nicht notwendig, die Relativbewegung von Gegenständen über die Zeit zu verfolgen, um die ortsfesten Gegenstände zu erkennen.

Eine weitere Grundidee des erfindungsgemäßen Verfahrens besteht darin, zur Eigenbewegungsbestimmung wenigstens eine vorgegebene Modellbeziehung zu verwenden, die für beliebige ortsfeste Gegenstände und verschiedene Fahrzeugeigenbewegungen eine kinematisch bedingte Abhängigkeit zwischen den Relativpositionen und den Relativgeschwindigkeiten in einer Ebene wiedergibt. Diese auf der Basis kinematischer Überlegungen erhältliche Modellbeziehung enthält dabei die Relativbewegungsparameter, deren Werte von der Eigenbewegung des Fahrzeugs bzw. Bewegung des Fahrzeugbezugssystems in dem Weltbezugssystem abhängen. Die Modellbeziehung kann insbesondere mehrere Funktionen umfassen. Die Modellbeziehung kann dabei in einer Form verwendet werden, die eine unmittelbare Verwendung der Daten der Datensätze erlaubt. Sie kann aber auch in einer Form verwendet werden, in der die Relativpositionen und -geschwindigkeiten als solche verwendet werden, wozu dann je nach Art der Daten gegebenenfalls zuvor eine Umrechnung der Daten in Relativpositionen und -geschwindigkeiten erfolgt.

Ausgehend von den Datensätzen für ortsfeste Gegenstände werden dann erfindungsgemäß die Werte der Relativbewegungsparameter so ermittelt, dass für alle ortsfesten Gegenstände gemeinsam eine Abhängigkeit zwischen den ortsfesten Gegenständen zugeordneten Relativgeschwindigkeiten einerseits und den entsprechenden Relativpositionen andererseits wiedergegeben wird. Die Modellbeziehung braucht dabei den Zusammenhang der tatsächlich bestimmten Relativgeschwindigkeiten und Relativpositionen nur mit einer vorgegebenen Genauigkeit wiederzugeben, da die tatsächlich erfassten Daten immer mit Messfehlern behaftet sind. Diese kann insbesondere in Abhängigkeit von der Genauigkeit der Daten in den Datensätzen gewählt sein.

Bei dem Verfahren wird dazu davon ausgegangen, dass unter den verfügbaren Datensätzen wenigstens zwei voneinander verschiedene Datensätze bzw. Daten wenigstens eines ortsfesten Gegenstands mit zwei getrennt erfassten Gegenstandsbereichen oder zwei ortsfesten Gegenständen zugeordnet sind. Dies bedeutet für ein Fahrzeug keine wesentliche Einschränkung, da in dessen Umgebung praktisch immer ortsfeste Gegenstände oder Gegenstandsbereiche vorhanden sind, die sich beispielsweise an der Seite der Fahrbahn befinden können.

Aus den bestimmten Relativbewegungsparametern werden dann eine Eigenrotationsgeschwindigkeit und/oder wenigstens eine Komponente der Eigenbahngeschwindigkeit des Fahrzeugs ermittelt. Unter der Eigenrotationsgeschwindigkeit des Fahrzeugs wird dabei eine Geschwindigkeit einer Bewegung verstanden, die eine Rotation einer vorgegebenen Richtung des Fahrzeugs umfasst. Vorzugsweise wird dabei die Geschwindigkeit einer Eigenrotation des Fahrzeugs um seinen Schwerpunkt verwendet, die auch als Giergeschwindigkeit bezeichnet wird.

Unter der Eigenbahngeschwindigkeit wird dagegen die verbleibende Bewegung des Fahrzeugs entlang der Bahn des Fahrzeugs, wie sie oben beschrieben wurde, verstanden.

Die Eigenrotationsgeschwindigkeit und die Eigenbahngeschwindigkeit können dabei in dem Fahrzeugbezugssystem oder in dem Weltbezugssystem ermittelt werden.

Dazu kann ein aus der Modellbeziehung bekannter Zusammenhang zwischen den Relativbewegungsparametern und der Eigenrotations- und -bahngeschwindigkeit des Fahrzeugs bzw. des Fahrzeugbezugssystems benutzt werden.

Vorzugsweise werden sowohl die Eigenrotationsgeschwindigkeit als auch die Eigenbahngeschwindigkeit bestimmt.

Die so ermittelten Daten können dann zur weiteren Verwendung gespeichert bzw. zwischengespeichert oder ausgegeben werden.

Das erfindungsgemäße Verfahren erlaubt daher die Bestimmung der Eigenbewegung des Fahrzeugs auf der Basis der Relativgeschwindigkeiten und -positionen zu nur einem Zeitpunkt, das heißt praktisch lediglich auf der Basis einer Momentaufnahme. Es ist daher einfach und jederzeit einsetzbar.

Darüber hinaus ist das Verfahren für beliebige Relativbewegungen zwischen dem Sensor bzw. dem Fahrzeug und den Gegenständen verwendbar. Insbesondere kann sich das Fahrzeug bzw. der Sensor auf die ortsfesten Gegenstände zu oder von diesen weg bewegen.

Weiterhin liefert das Verfahren überraschend genaue Daten für die Eigenbewegung des Fahrzeugs. Die Daten sind im Allgemeinen deutlich genauer als Daten von Raddrehzahlsensoren, Gierratensensoren, Lenkradwinkelsensoren und Querbeschleunigungssensoren.

Schließlich kann die Eigenbewegung auch in undefinierten Fahrzuständen wie beispielsweise bei einer Schleuderbewegung zuverlässig ermittelt werden, was mit Raddrehzahlsensoren, Gierratensensoren, Lenkradwinkelsensoren und Querbeschleunigungssensoren nicht oder nur sehr ungenau möglich ist.

Weiterbildungen und bevorzugte Ausführungsformen der Erfindung sind in den Ansprüchen, der Beschreibung und den Zeichnungen beschrieben.

Grundsätzlich kann das erfindungsgemäße Verfahren unter Verwendung von Gegenständen erfolgen, von denen bereits bekannt ist, dass sie ortsfest sind. Entsprechende Informationen können beispielsweise durch ein Objekterkennungs- und -verfolgungsverfahren bereitgestellt werden, bei dem insbesondere eine Objektklassifizierung erfolgen kann. Es ist jedoch bevorzugt, dass zur Bestimmung der ortsfesten Gegenstände eine größte Gruppe von Datensätzen ermittelt wird, für die eine Abhängigkeit zwischen den den jeweiligen Gegenständen zugeordneten Relativgeschwindigkeiten und entsprechenden Relativpositionen durch die wenigstens eine Modellbeziehung und dieser Gruppe zugeordnete Relativbewegungsparameter wenigstens mit einer vorgegebenen Genauigkeit approximierbar ist, und dass aus den der ermittelten, den ortsfesten Gegenständen entsprechenden Gruppe zugeordneten Relativbewegungsparametern die Eigenrotationsgeschwindigkeit und/oder die wenigstens eine Komponente der Eigenbahngeschwindigkeit des Fahrzeugs ermittelt werden. Dazu können zunächst entsprechende Gruppen ermittelt werden, aus denen dann die größte ausgewählt wird. Da die Daten und damit die Relativpositionen und -geschwindigkeiten in der Regel Messfehler bzw. gegebenenfalls bei einer Nachverarbeitung auftretende Fehler enthalten, braucht die Approximation dabei nur mit der vorgegebenen Genauigkeit zu erfolgen, die unter anderem in Abhängigkeit von der Messgenauigkeit des Sensors bzw. einem empirisch ermittelten mittleren Fehler der Relativpositionen und -geschwindigkeiten festgelegt werden kann. Relativpositionen und -geschwindigkeiten bewegter Gegenstände sind in der Regel mit dieser vorgegebenen Genauigkeit mit der Modellbeziehung jedoch nicht mehr approximierbar, so dass damit in Abhängigkeit von der vorgegebenen Genauigkeit eine Unterscheidung zwischen bewegten und ortsfesten Gegenständen möglich ist. Gleichzeitig können dann die den ortsfesten Gegenständen zugeordneten Relativbewegungsparameter ermittelt werden. Die vorgegebene Genauigkeit dient daher gleichzeitig zur Separation von ortsfesten und bewegten Gegenständen. Diese Bestimmung der ortsfesten Gegenstände ist immer dann von Vorteil, wenn davon auszugehen ist, dass mehr Datensätze in Bezug auf ortsfeste Gegenstände vorhanden sind als Datensätze in Bezug auf mit ähnlicher Geschwindigkeit und Richtung bewegte Gegenstände. Solche Bedingungen treten beispielsweise beim Betrieb von Fahrzeugen in Werkshallen auf.

Treten jedoch Situationen auf, in denen mehrere, sich zufällig mit gleicher Geschwindigkeit in dem Weltbezugssystem bewegende Gegenstände erfasst werden und es mehr Datensätze in Bezug auf diese Gegenstände als in Bezug auf ortsfeste Gegenstände gibt, könnte die größte Gruppe von Datensätzen auch diesen bewegten Gegenständen entsprechen.

Es ist daher bevorzugt, dass zur Bestimmung der ortsfesten Gegenstände Gruppen von Datensätzen ermittelt werden, für die eine Abhängigkeit zwischen den den jeweiligen Gegenständen zugeordneten Relativgeschwindigkeiten und entsprechenden Relativpositionen durch die wenigstens eine Modellbeziehung und dieser Gruppe zugeordnete Relativbewegungsparameter wenigstens mit einer vorgegebenen Genauigkeit approximierbar ist, dass, wenn mehr als eine Gruppe ermittelt wird, unter diesen Gruppen anhand wenigstens eines vorgegebenen Kriteriums eine den ortsfesten Gegenständen entsprechende Gruppe ermittelt wird, während sonst die einzige ermittelte Gruppe als ortsfesten Gegenständen entsprechend angesehen wird, und dass aus den der ermittelten, den ortsfesten Gegenständen entsprechenden Gruppe zugeordneten Relativbewegungsparametern die Eigenrotationsgeschwindigkeit und/oder die wenigstens eine Komponente der Eigenbahngeschwindigkeit des Fahrzeugs ermittelt werden. Da die Daten und damit die Relativpositionen und -geschwindigkeiten in der Regel Messfehler bzw. gegebenenfalls bei einer Nachverarbeitung auftretende Fehler enthalten, braucht die Approximation dabei nur mit der vorgegebenen Genauigkeit zu erfolgen, die unter anderem in Abhängigkeit von der Messgenauigkeit des Sensors bzw. einem empirisch ermittelten mittleren Fehler der Relativpositionen und -geschwindigkeiten festgelegt werden kann. Dabei genügt es zu erkennen, dass die Approximation möglich ist, die Bestimmung der entsprechenden Relativbewegungsparameter braucht grundsätzlich erst dann zu erfolgen, wenn sie notwendig ist. Vorzugsweise können jedoch auch die Relativbewegungsparameter gleichzeitig bestimmt werden. Relativpositionen und -geschwindigkeiten unterschiedlich bewegter Gegenstände sind in der Regel mit dieser vorgegebenen Genauigkeit mit der Modellbeziehung nicht mehr approximierbar, so dass damit in Abhängigkeit von der vorgegebenen Genauigkeit eine erste Unterscheidung möglich ist. Gleichzeitig können dann die den ortsfesten Gegenständen zugeordneten Relativbewegungsparameter ermittelt werden. Die vorgegebene Genauigkeit dient daher gleichzeitig zur ersten Separation von ortsfesten und bewegten Gegenständen.

Treten nun Situationen auf, in denen mehrere, sich zufällig mit gleicher Geschwindigkeit in dem Weltbezugssystem bewegende Gegenstände erfasst werden, können auch zwei oder mehr entsprechende Gruppen von Datensätzen auftreten, für die eine Abhängigkeit zwischen den den jeweiligen Gegenständen zugeordneten Relativgeschwindigkeiten und entsprechenden Relativpositionen durch die wenigstens eine Modellbeziehung approximierbar ist. In diesem Fall wird wenigstens ein Kriterium herangezogen, um diejenige Gruppe auszuwählen, die ortsfesten Gegenständen entspricht. Die dieser Gruppe zugeordneten Gegenstände werden dann als ortsfeste Gegenstände angesehen. Auf diese ist eine zuverlässige Bestimmung der ortsfesten Gegenstände und damit der Eigenbewegung des Fahrzeugs auch in ungünstigen Situationen wie z.B. einer Kolonnenfahrt möglich.

Bei dem Kriterium kann es sich um ein Konsistenz- bzw. Plausibilitätskriterium handeln, bei dem geprüft wird, ob die für die jeweilige Gruppe ermittelten Relativbewegungsparameter mit möglichen physikalischen Gegebenheiten wie zum Beispiel der Fahrsituation wenigstens näherungsweise konsistent sind. Es ist daher bevorzugt, dass das Verfahren zyklisch wiederholt wird, und dass in verschiedenen Zyklen unterschiedliche Kriterien verwendet werden. Das wenigstens eine Kriterium kann so der Fahrsituation angepasst werden, beispielsweise kann es bei einem Neustart des Fahrzeugs, bei dem das Fahrzeug mit großer Sicherheit im Weltbezugssystem ruht, anders gewählt sein, als nach Beginn einer Fahrt.

Es ist besonders bevorzugt, dass das Verfahren zyklisch wiederholt wird, und dass als Kriterium verwendet wird, dass sich die Relativbewegungsparameter der Gruppe in einem aktuellen Zyklus, die ortsfesten Gegenständen entspricht, höchstens um für die jeweiligen Relativbewegungsparameter vorgegebene Beträge von den entsprechenden Relativbewegungsparametern der in einem vorhergehenden Zyklus ortsfesten Gegenständen entsprechenden Gruppe unterscheiden. Dabei kann ausgenutzt werden, dass sich aufgrund der Masse und des Trägheitsmoments des Fahrzeugs dessen Eigenbewegung zwischen zwei Zyklen nicht beliebig verändern kann, so dass sich auch die Relativbewegungsparameter nicht beliebig ändern können.

Alternativ oder zusätzlich ist es besonders bevorzugt, dass mittels entsprechender Fahrzeugsensoren Daten über einen Fahrzustand des Fahrzeugs ermittelt werden, und dass als Kriterium verwendet wird, dass Relativbewegungsparameter der Gruppe von Datensätzen, die ortsfesten Gegenständen entspricht, innerhalb vorgegebener Toleranzen mit den mittels des Fahrzeugsensors ermittelten Daten über den Fahrzustand des Fahrzeugs konsistent sind. Als Fahrzeugsensoren können insbesondere Raddrehzahlsensoren, Lenkradwinkelsensoren, Gierratensensoren oder Querbeschleunigungssensoren verwendet werden, deren Daten in Bezug auf den Fahrzustand des Fahrzeugs dazu verwendet werden, Gruppen von Datensätzen auszusondern, die aufgrund der ihnen zugeordneten Relativbewegungsparameter nicht den Eigenbewegungszustand des Fahrzeugs wiedergeben. Die Toleranzen können dabei insbesondere in Abhängigkeit von der Messgenauigkeit der Fahrzeugsensoren und der Masse und dem Trägheitsmoment des Fahrzeugs bestimmt sein.

Weiterhin ist es besonders bevorzugt, dass zusätzlich zu dem wenigstens einen Kriterium als weiteres Kriterium verwendet wird, dass die Anzahl der Datensätze in der ortsfesten Gegenständen entsprechenden Gruppe größer ist in allen anderen Gruppen, die das wenigstens eine Kriterium erfüllen. Damit kann der Tatsache Rechnung getragen werden, dass in der Regel mehr Datensätze in Bezug auf ortsfeste Gegenstände auftreten als auf Gegenstände, die sich mit gleicher Geschwindigkeit im Weltbezugssystem bewegen und das wenigstens eine Kriterium erfüllen. Bei dieser Ausführung des Verfahrens kann die Ermittlung der beiden Kriterien genügenden Gruppe von Datensätzen insbesondere derart erfolgen, dass die ermittelten Gruppen zunächst nach der Anzahl der ihnen jeweils zugeordneten Datensätze geordnet werden und dann in einer Reihenfolge absteigender Anzahl der zugeordneten Datensätze das wenigstens eine Kriterium überprüft wird.

Für die Durchführung des erfindungsgemäßen Verfahrens braucht daher nicht von vornherein bekannt zu sein, welche Gegenstände bewegt und welche ortsfest sind. In diesem Sinne ist derjenige Teil des erfindungsgemäßen Verfahrens zur Bestimmung der Eigenbewegung, der die eigentliche Bestimmung der Eigenrotationsgeschwindigkeit und der Eigenbahngeschwindigkeit je nach verwendeter Methode zur Bestimmung der Relativbewegungsparameter nicht mehr zu umfassen braucht, auch als Verfahren zur Ermittlung von ortsfesten Gegenständen aufzufassen, das als solches ebenfalls Gegenstand der Erfindung ist.

Weiterhin ist es bevorzugt, dass die Relativbewegungsparameter unter Verwendung eines Maximum-Likelihood-Schätzverfahrens bestimmt werden. Dies schließt auch ein, diese Schätzverfahren bei der Bestimmung der ortsfesten Gegenstände zu verwenden, wenn zur Bestimmung der größten Gruppe auch Relativbewegungsparameter bestimmt werden.

Solche Schätzverfahren sind einfach und schnell durchführbar. Bei Verwendung einer linearen Funktion als Modellbeziehung kann insbesondere eine lineare Regression durchgeführt werden.

Um eine schnelle und einfache Eigenbewegungsbestimmung zu erreichen, ist es bevorzugt, dass eine Modellbeziehung verwendet wird, mittels derer eine Abhängigkeit zwischen einer Komponente der Relativgeschwindigkeit der ortsfesten Gegenstände entlang einer ersten Bezugsrichtung und einer entsprechenden Komponente der Relativposition entlang einer zweiten, zu der ersten orthogonalen Bezugsrichtung wiedergebbar ist. Die Bezugsrichtungen sind dabei in dem mit dem Fahrzeug mitbewegten Fahrzeugbezugssystem festgelegt. Bei dieser Weiterbildung wird ausgenutzt, dass sich die ortsfesten Gegenstände in dem Fahrzeugbezugssystem gemeinsam bewegen. Entsprechend der Bewegungsarten des Fahrzeugbezugssystems können gemeinsame Rotationen der ortsfesten Gegenstände um den Bezugspunkt, um den das Fahrzeugbezugssystem rotiert, und gemeinsame lineare Bewegungen, d.h. Translationen, der ortsfesten Gegenstände allein oder überlagert auftreten. Die Relativgeschwindigkeit weist daher im allgemeinen einen Anteil auf, der auf eine gemeinsame Rotation zurückzuführen ist, sowie einen Anteil, der auf eine gemeinsame Translation, d.h. geradlinige Bewegung zurückzuführen ist. Für eine reine Rotationsbewegung der ortsfesten Gegenstände in dem Fahrzeugbezugssystem ist dabei die Komponente der Relativgeschwindigkeit in einer beliebigen vorgegebenen ersten Bezugsrichtung proportional zu der Komponente der Relativposition in der dazu orthogonalen zweiten Bezugsrichtung, für eine reine Translationsbewegung, d.h. eine lineare Bewegung, in dem Fahrzeugsbezugssystem dagegen ist die Komponente der Relativgeschwindigkeit in der ersten Bezugsrichtung unabhängig von der Komponente der Relativposition in der zweiten Bezugsrichtung. Insbesondere kann die Modellbeziehung daher durch eine lineare Funktion gegeben sein. Da eine lineare Funktion durch nur zwei Parameter festgelegt ist, erlaubt die Verwendung linearer Funktionen eine besonders schnelle Bestimmung dieser Werte. Darüber hinaus sind entsprechende Methoden zur Bestimmung der Werte aufgrund der Linearität besonders einfach und zuverlässig durchführbar.

Eine entsprechende weitere Modellbeziehung kann unter Vertauschung der ersten und zweiten Bezugsrichtung zusätzlich verwendet werden, um z.B. die Komponente der Relativgeschwindigkeit der ortsfesten Gegenstände, die einer gemeinsamen Translation entspricht, bzw. der Eigenbahngeschwindigkeit entlang der zweiten Bezugsrichtung zu erhalten.

Um die ortsfesten Gegenstände einfach und schnell ermitteln zu können ist es daher insbesondere bevorzugt, dass bei der Bestimmung der ortsfesten Gegenstände Gruppen von Datensätzen ermittelt werden, für die ein Zusammenhang zwischen einer Komponente der Relativgeschwindigkeit der entsprechenden Gegenstände entlang einer ersten Bezugsrichtung und einer entsprechenden Komponente der Relativposition entlang einer zweiten, zu der ersten orthogonalen Bezugsrichtung durch eine dieser Gruppe zugeordnete, durch zwei Relativbewegungsparameter parametrisierte lineare Funktion mit der vorgegebenen Genauigkeit approximierbar ist, und dass aus den Relativbewegungsparametern, die der ortsfesten Gegenständen entsprechenden Gruppe zugeordnet sind, die Eigenrotationsgeschwindigkeit und/oder wenigstens eine Komponente der Eigenbahngeschwindigkeit des Fahrzeugs entlang der ersten Bezugsrichtung ermittelt werden. Die Bezugsrichtungen sind dabei wie oben beschrieben in dem Fahrzeugbezugssystem festgelegt. Da eine lineare Funktion durch nur zwei Parameter parametrisierbar ist, sind nur zwei Relativbewegungsparameter zu bestimmen. Die lineare Funktion entspricht dabei der oben erwähnten Modellbeziehung. Bei der Ermittlung der ortsfesten Gegenstände können daher gleichzeitig die entsprechenden Relativbewegungsparameter ermittelt werden. Eine entsprechende Ermittlung der Relativbewegungsparameter kann unabhängig unter Vertauschung der ersten und zweiten Bezugsrichtung durchgeführt werden, um die Komponente der Relativgeschwindigkeit der ortsfesten Gegenstände entlang der zweiten Bezugsrichtung, die durch deren Translation in dem Fahrzeugbezugssystem bedingt ist, zu erhalten, ist aber auch mit anderen Verfahren möglich, für die bekannt sein muss, dass die Gegenstände ortsfest sind.

In einer vereinfachten geometrischen Veranschaulichung kann man sich vorstellen, dass die entsprechenden Komponenten der Relativgeschwindigkeiten und der Relativpositionen für alle Datensätze bzw. Gegenstände als Punkte in ein entsprechendes Diagramm bzw. Koordinatensystem eingetragen werden, dessen eine Achse für die Komponente der Relativposition in der zweiten Bezugsrichtung und dessen andere Achse für die entsprechende Komponente der Relativgeschwindigkeit in der ersten Bezugsrichtung verwendet wird. Der Ermittlung der Relativbewegungsparameter entspricht es dann, dass durch die eingetragenen Punkte möglichst gut eine Gerade gelegt wird. Auf bzw. nahe der Geraden liegende Punkte sind dabei den ortsfesten Gegenständen zugeordnet.

Um eine besonders zuverlässige Bestimmung der ortsfesten Gegenstände zu gewährleisten, ist es bevorzugt, dass bei der Ermittlung der ortsfesten Gegenstände Gruppen von Datensätzen ermittelt werden, für die ein Zusammenhang zwischen einer Komponente der Relativgeschwindigkeit der entsprechenden Gegenstände entlang einer ersten Bezugsrichtung und einer entsprechenden Komponente der Relativposition entlang einer zweiten, zu der ersten orthogonalen Bezugsrichtung durch eine dieser Gruppe zugeordnete lineare, durch zwei Relativbewegungsparameter parametrisierte Funktion und zusätzlich ein weiterer Zusammenhang zwischen einer Komponente der Relativgeschwindigkeit der entsprechenden Gegenstände entlang der zweiten Bezugsrichtung und einer Komponente der Relativposition entlang der ersten Bezugsrichtung durch eine dieser Gruppe zugeordnete weitere lineare, durch zwei weitere Relativbewegungsparameter parametrisierte Funktion mit einer vorgegebenen Genauigkeit approximierbar ist, und dass wenigstens die Eigenrotationsgeschwindigkeit und/oder eine Komponente der Eigenbahngeschwindigkeit des Fahrzeugs entlang der entsprechenden Bezugsrichtung aus zwei Relativbewegungsparametern, die eine der linearen Funktionen, die der ortsfesten Gegenständen entsprechenden Gruppe zugeordnet sind, parametrisieren, ermittelt werden. Hierdurch kann mit sehr hoher Wahrscheinlichkeit vermieden werden, dass bewegte Gegenstände, für die eine Abhängigkeit zwischen einer Komponente der Relativgeschwindigkeiten in einer Bezugsrichtung und der entsprechenden Komponente der Relativposition in der anderen Bezugsrichtung zufällig durch die entsprechende bestimmte lineare Funktion wiedergegeben wird, als ortsfest eingeordnet werden, da entsprechendes für die Komponenten in den entsprechenden anderen Bezugsrichtungen nicht gelten wird.

Um eine besonders einfache Ermittlung der Eigenrotations- und Eigenbahngeschwindigkeit zu erreichen, ist es besonders bevorzugt, dass der erste Relativbewegungsparameter ein Proportionalitätskoeffizient für die lineare Funktion ist, aus dem die Eigenrotationsgeschwindigkeit bestimmbar ist, und dass der zweite Relativbewegungsparameter eine Konstante ist, aus der die Komponente der Eigenbahngeschwindigkeit entlang der ersten Bezugsrichtung bestimmbar ist. Unter dem Proportionalitätskoeffizienten und der Konstante werden hierbei der Koeffizient eines linearen Terms einer linearen Funktion bzw. der von der unabhängigen Variablen der Funktion unabhängige Beitrag verstanden. Insbesondere kann der Proportionalitätskoeffizient je nach Definition der linearen Funktion die Winkelgeschwindigkeit der Rotation der ortsfesten Gegenstände relativ zu dem Fahrzeug bzw. in dem Fahrzeugbezugssystem, d.h. beispielsweise um den bereits erwähnten Referenzpunkt an dem Fahrzeug, das Negative dieser Winkelgeschwindigkeit oder deren Kehrwert wiedergeben. Weiterhin kann aus der Konstante eine entsprechende Komponente der Eigenbahngeschwindigkeit des Fahrzeugs bzw. eine entsprechende Komponente des auf eine gemeinsame Translation der ortsfesten Gegenstände in dem Fahrzeugbezugssystem zurückgehenden Anteils der Relativgeschwindigkeit der ortsfesten Gegenstände ermittelbar sein. Es ergibt sich eine schnelle und einfache Ermittlung der Eigenbewegung aufgeteilt nach Translation und Rotation.

Weiterhin ist es bevorzugt, dass die Gruppen von Datensätzen und die Relativbewegungsparameter durch Verwendung einer Hough-Transformation ermittelt werden. Die Hough-Transformation, unter der auch Verallgemeinerungen des ursprünglich von Hough in US 3 069 654 offenbarten Verfahrens verstanden werden, ist in der Bildverarbeitung grundsätzlich bekannt (vgl. etwa Haberäcker, P., "Praxis der digitalen Bildverarbeitung und Mustererkennung", Carl Hanser Verlag, München, 1995, sowie Bräunl, Thomas, Feyer, Stefan, Rapf, Wolfgang, Reinhardt, Michael, "Parallele Bildverarbeitung; Addison-Wesley, Bonn 1995, Seite IX, 205 und Jähne, Bernd, "Digitale Bildverarbeitung", Springer Verlag, Berlin 1991) und dient dort dazu, in Bildern vorgegebene, geometrische Gebilde und insbesondere Geraden aufzufinden. Sie ist daher direkt auf die Bestimmung einer linearen Funktion, deren geometrische Darstellung gerade eine Gerade ist, übertragbar. Die Verwendung der Hough-Transformation erlaubt eine einfache Bestimmung von Geraden bzw. der entsprechenden linearen Funktion auch bei ungünstigen Datenverteilungen.

Es ist, insbesondere bei einer nicht sehr großen Anzahl von Gegenständen bzw. Datensätzen, besonders bevorzugt, dass die Gruppen von Datensätzen dadurch ermittelt werden, dass für alle Paare von Datensätzen aus den jeweiligen Komponenten der Relativgeschwindigkeiten entlang der einen Bezugsrichtung und die entsprechenden Komponenten der Relativpositionen entlang der anderen Bezugsrichtung Werte von zwei paarspezifischen Parametern, die eine für das Paar spezifische lineare paarspezifische Funktion bestimmen, ermittelt werden, wobei die lineare paarspezifische Funktion den Zusammenhang zwischen den jeweiligen Komponenten der Relativgeschwindigkeit entlang der einen Bezugsrichtung und den entsprechenden Komponenten der Relativposition entlang der anderen Bezugsrichtung wiedergibt, dass aus der Menge der so gebildeten Wertepaare für die paarspezifischen Parameter Cluster ähnlicher Wertepaare gebildet werden, wobei jedes Cluster einer Gruppe von Datensätzen entspricht, und dass für jedes Cluster ein erster und ein zweiter Relativbewegungsparameter aus den Datensätzen von Gegenständen ermittelt werden, die Wertepaaren in dem Cluster zugeordnet sind. Dabei entspricht also jedem Cluster eine entsprechende Gruppe von Datensätzen, die wenigstens einem der zu dem jeweiligen Cluster gehörigen Wertpaare zugrunde liegt.

In der bereits erwähnten geometrischen Veranschaulichung bedeutet dies, dass durch alle Paare von Punkten in dem Diagramm Geraden gelegt werden. Dann werden Werte von paarspezifischen Parametern, die die Lage und Steigung der Geraden bestimmen, ermittelt, die, in ein entsprechendes weiteres Diagramm eingetragen, zumindest ein Cluster bilden, dessen Wertepaare aus Datensätzen ortsfester Gegenstände ermittelt wurden. Grundsätzlich können jedoch weitere Cluster auftreten. Aus den Clustern bzw. Gruppen kann dann mit den oben beschriebenen Methoden ein Cluster bzw. eine Gruppe ermittelt werden, das bzw. die ortsfesten Gegenständen entspricht.

Die Clusterbildung kann dabei beispielsweise mit bekannten Clusterbildungsmethoden erfolgen, wobei auch hier Clusterbildungsparameter, die Einfluss darauf haben, welche Wertepaare einem Cluster zugerechnet werden und welche Gegenstände so als ortsfest angesehen werden, vorgegeben werden können. Ein solcher Clusterbildungsparameter kann insbesondere in Abhängigkeit von der vorgegebenen Genauigkeit und gegebenenfalls der Messgenauigkeit des Sensors bzw. einem mittleren zu erwartenden Messfehler der Daten, einem Nachverarbeitungsverfahren für die Daten und/oder durch Optimierungsversuche bestimmt werden. Dieses Vorgehen zur Bestimmung der ortsfesten Gegenstände zeichnet sich insbesondere bei nur kleinen Anzahlen von Daten bzw. Gegenständen durch eine im Vergleich zu einer Hough-Transformation höhere Verarbeitungsgeschwindigkeit bei wenigstens gleich guten Resultaten aus. Weiterhin weist es eine hohe Trennschärfe auf.

Dabei ist es besonders bevorzugt, dass der erste und der zweite paarspezifische Parameter ein Proportionalitätskoeffizient und eine Konstante sind, die die lineare paarspezifische Funktion parametrisieren. So gewählte paarspezifische Parameter führen zu einer einfachen und trennscharfen Clusterbildung, was die Ausführungsgeschwindigkeit wesentlich erhöht.

Grundsätzlich genügen zur Durchführung des Verfahrens Daten in Bezug auf die Relativpositionen und Relativgeschwindigkeiten zu nur einem Zeitpunkt. Es ist daher bevorzugt, dass das Verfahren zyklisch wiederholt durchgeführt wird, und dass bei der Ermittlung der ortsfesten Gegenstände und/oder der Relativbewegungsparameter Ergebnisse der Ermittlung der ortsfesten Gegenstände und/oder der Relativbewegungsparameter in wenigstens einem vorhergehenden Zyklus verwendet werden. Auf diese Weise kann die Ausführungsgeschwindigkeit erhöht werden. Insbesondere kann bei einer iterativen Ermittlung von Relativbewegungsparametern von deren Werten in vorhergehenden Zyklen als Startwerten ausgegangen werden. Weiterhin kann, je nach Situation, von einer Weiterbildung des Verfahrens auf eine andere übergangen werden, beispielsweise wenn einmal als ortsfest ermittelte Gegenstände durch eine Objektverfolgung weiterhin verfolgt werden und deren Relativbewegung zur Eigenbewegungsbestimmung ausgenutzt werden kann.

Besonders bevorzugt ist es bei Verwendung einer linearen Funktion, die durch zwei Relativbewegungsparameter parametrisiert ist, dass bei der Bestimmung wenigstens eines der Relativbewegungsparameter in einem aktuellen Zyklus der Wert wenigstens eines der Relativbewegungsparameter in wenigstens einem vorhergehenden Zyklus verwendet wird. Insbesondere kann bei der Hough-Transformation oder der Clusterbildung so wesentlich treffgenauer nach Häufungspunkten bzw. Clustern gesucht werden, da sich die Eigenbewegung eines Fahrzeugs und damit die Werte der Relativbewegungsparameter nicht beliebig schnell, sondern beispielsweise durch dessen Trägheitsmoment für Rotationen um die Hochachse, dessen maximale Beschleunigung und dessen maximale Verzögerung bedingt begrenzt schnell verändern kann.

Bei dem erfindungsgemäßen Verfahren können grundsätzlich beliebige Daten in Bezug auf die Relativposition und Relativgeschwindigkeit der Gegenstände verwendet werden. Bei einer Ausführungsform des erfindungsgemäßen Verfahrens ist es jedoch bevorzugt, dass mit dem Sensor Rohdaten erfasst werden, und dass als Daten die Rohdaten des Sensors verwendet werden. Unter Rohdaten werden dabei gegebenenfalls nachverarbeitete Daten bzw. Bilder des Sensors verstanden, die noch keiner Segmentierung unterzogen wurden. Es können jedoch andere Datenmanipulationen wie zum Beispiel Transformationen in vorgegebene Koordinatensysteme oder Korrekturen durch Bewegung des Sensors vor der Ausgabe der Rohdaten bereits erfolgt sein. Weiterhin können aus von dem Sensor erfassten Positionsdaten eines Gegenstandsbereichs Relativgeschwindigkeiten dieses Bereichs bestimmt worden sein. Werden Daten eines Sensors verwendet, der Gegenstandsbereiche auf einem hinreichend großen Gegenstand auflösen kann, kann so anhand nur eines einzigen solchen hinreichend großen Gegenstands die Eigenbewegung des Fahrzeugs vollständig ermittelt werden.

Alternativ ist es bevorzugt, dass mit dem Sensor Rohdaten erfasst werden, dass unter Verwendung der Rohdaten eine Objektverfolgung durchgeführt wird, und dass als Daten Relativgeschwindigkeiten und Relativpositionen von so verfolgten Objekten verwendet werden. Die Objekte können dabei zum einen erkannten Gegenständen entsprechen, wobei die Relativposition und -geschwindigkeit des jeweiligen Objekts denen eines Objektbezugspunktes entsprechen kann. Als Objekte können jedoch, insbesondere bei der Verwendung von Stereo-Videokameras, auch nur bestimmte Muster bzw. charakteristische Bildbereiche oder Gegenstandsmerkmale eines Gegenstands verwendet werden, nach denen in den von den Stereo-Videokameras aufgenommenen Bildern gesucht wird, bevor aus diesen Mustern bzw. Bildbereichen oder Gegenstandsmerkmalen in den beiden Bildern zu dem entsprechenden Gegenstand zugeordnete Relativpositionen und/oder -geschwindigkeiten ermittelt werden.

Weiterhin ist es bevorzugt, dass mittels entsprechender Sensoren Daten über einen Fahrzustand des Fahrzeugs ermittelt werden und dass die Daten zur Bestimmung der ortsfesten Gegenstände und/oder der Bestimmung der Eigenrotationsgeschwindigkeit und/oder der Eigenbahngeschwindigkeit des Fahrzeugs verwendet werden. Solche mit konventionellen Sensoren wie z.B. Raddrehzahlsensoren, Lenkradwinkelsensoren, Gierratensensoren oder Querbeschleunigungssensoren ermittelten Daten, können helfen, Schätzwerte für Relativbewegungsparameter, beispielsweise für eine lineare Funktion, zu gewinnen, die als Ausgangspunkt zur schnellen und genauen Bestimmung der tatsächlichen Werte dienen. Insbesondere können sie in analoger Art und Weise verwendet werden, wie es oben für Relativbewegungsparameter aus vorhergehenden Zyklen bei wiederholter Ausführung des Verfahrens beschrieben wurde.

Bei dem erfindungsgemäßen Verfahren können Daten beliebiger Sensoren für elektromagnetische Strahlung verwendet werden, mittels derer Relativpositionen und/oder Relativgeschwindigkeiten von Gegenständen oder Gegenstandsbereichen ermittelbar sind. Es ist jedoch bevorzugt, dass die Daten unter Verwendung eines Laserscanners ermittelt werden. Unter einem Laserscanner wird dabei eine Vorrichtung mit wenigstens einem Laser und einem Sensor für Licht des Lasers verstanden, mittels derer ein Erfassungsbereich mit einem oder mehreren Laserlichtbündeln zyklisch abtastbar ist, wobei aus dem reflektierten und von dem Sensor empfangenen Licht des Laserlichtbündels eine Position von Gegenstandsbereichen ermittelbar ist, an denen das Laserlichtbündel reflektiert bzw. remittiert wurde. Unter Licht wird dabei elektromagnetische Strahlung im infraroten oder sichtbaren Bereich des elektromagnetischen Spektrums verstanden. Besonders bevorzugt werden Laserscanner verwendet, bei denen mindestens ein gepulstes Laserlichtbündel über einen Erfassungsbereich geschwenkt wird und aus der Laufzeit der Laserlichtpulse zwischen Abgabe des Laserlichtbündels und Empfang des einem Gegenstandsbereich reflektierten bzw. remittierten Laserlichtpulses ein Abstand des reflektierenden bzw. remittierenden Gegenstandsbereichs von dem Laserscanner ermittelbar ist. Zusammen mit der Winkelposition, bei der der Laserlichtpuls abgestrahlt bzw. empfangen wurde, kann so die Position des Gegenstandsbereichs festgelegt werden. Laserscanner zeichnen sich durch einen sehr hohe Genauigkeit und Geschwindigkeit bei der Positionsbestimmung aus.

Zusätzlich oder alternativ ist es bevorzugt, dass die Daten unter Verwendung einer Stereo-Videokamera ermittelt werden. Unter einer Stereo-Videokamera wird hierbei eine Vorrichtung mit wenigstens zwei räumlich voneinander beabstandeten Fokussierungseinrichtungen und wenigstens zwei entsprechenden Sensoren für infrarotes und/oder sichtbares Licht verstanden, auf die jeweils von einer der Fokussierungseinrichtungen Licht aus einem gemeinsamem Erfassungsbereich fokussiert wird. Insbesondere können beispielsweise CCD-Sensoren verwendet werden. Mit bekannten Verfahren der Videobildverarbeitung können aus so erfassten Bildern der beiden Sensoren unter Berücksichtigung der räumlichen Lage der Sensoren und der Fokussierungseinrichtungen Positionen und Geschwindigkeiten von Merkmalsbereichen in Bildern ermittelt werden. Solche Sensoren zeichnen sich insbesondere dadurch aus, dass sie zusätzlich zu der Relativpositionsinformation in der zweiten Ebene auch noch Bildinformationen in einer weiteren Raumdimension liefern, was die Erkennung von Objekten vereinfachen kann.

Alternativ oder zusätzlich ist es bevorzugt, dass die Daten unter Verwendung wenigstens eines Radarsensors ermittelt werden. Vorzugsweise werden dabei Systeme mit wenigstens zwei Radarsensoren verwendet. Radarsensoren zeichnen sich insbesondere dadurch aus, dass Geschwindigkeiten von Gegenständen mit hoher Genauigkeit ermittelt werden können.

Das erfindungsgemäße Verfahren kann grundsätzlich unabhängig von anderen Verfahren und allein zur Eigenbewegungsbestimmung verwendet werden. Es ist jedoch bevorzugt, dass es in Verbindung mit einem Verfahren zur Objekterkennung und -verfolgung verwendet wird, und dass die ermittelten Informationen über ortsfeste Gegenstände bei einer Objektklassifizierung verwendet werden. Auf diese Weise können ohne Vorwissen über die bei einer Objekterkennung und/oder -verfolgung ermittelten Objekte Objekte bereits entsprechend Ihres Bewegungszustands in zwei Klassen eingeteilt werden, was die weitere Klassifikation wesentlich erleichtern kann.

Weiterer Gegenstand der Erfindung ist ein Computerprogramm mit Programmcode-Mitteln, um das erfindungsgemäße Verfahren durchzuführen, wenn das Programm auf einem Computer ausgeführt wird. Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Gegenstand der Erfindung ist auch ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Die Erfindung wird im Folgenden beispielhaft anhand der Zeichnungen weiter erläutert. Es zeigen:

Fig. 1          eine schematische Draufsicht auf eine Verkehrsituation,

Fig.2A, B    Diagramme, in denen schematisch für die Gegenstände in Fig. 1 Komponenten einer Relativgeschwindigkeit in einer ersten bzw. zweiten Bezugsrichtung gegen entsprechende Komponen- ten der Relativposition in der zweiten bzw. der ersten Bezugs- richtung aufgetragen sind,

Fig. 3          ein Ablaufdiagramm, das schematisch einen Gesamtablauf eines Verfahrens zur Bestimmung einer Eigenbewegung des Fahrzeugs in Fig. 1 darstellt,

Fig. 4          ein Ablaufdiagramm, das Teilschritte eines Schrittes S 16 in Fig. 3 bei einem erfindungsgemäßen Verfahren nach einer zweiten bevorzugten Ausführungsform der Erfindung zeigt,

Fig. 5          ein Ablaufdiagramm, das Teilschritte eines Schrittes S 16 in Fig. 3 bei einem erfindungsgemäßen Verfahren nach einer dritten bevorzugten Ausführungsform der Erfindung zeigt,

Fig. 6A,      B Diagramme zur geometrischen Veranschaulichung eines Teilschritts S26 in Fig. 5 und

Fig. 7A, B      Diagramme zur geometrischen Veranschaulichung eines Teilschritts S28 in Fig. 5.

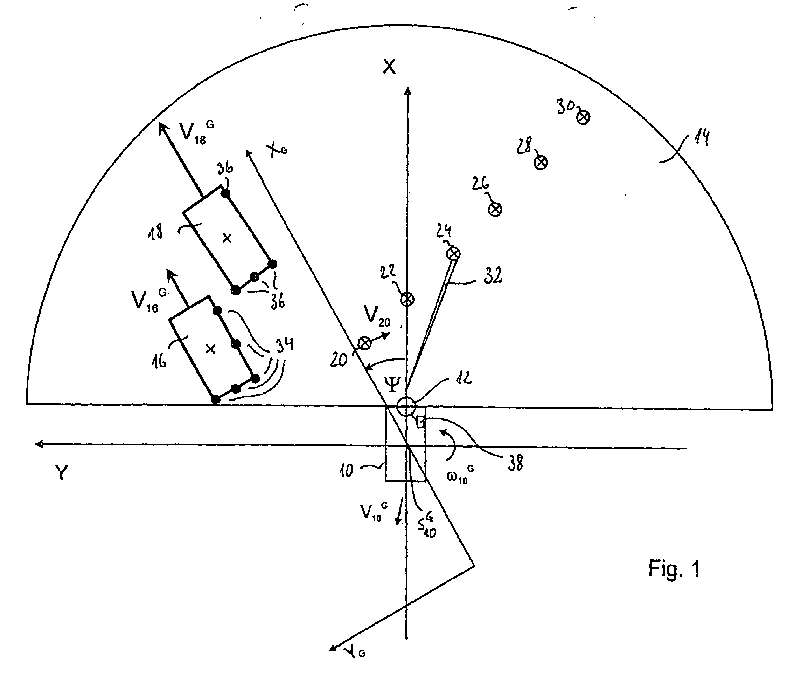

In Fig. 1 ist an der Frontseite eines sich bewegenden Fahrzeugs 10 ein Laserscanner 12 angeordnet, dessen verkleinert gezeigter Sicht- bzw. Erfassungsbereich 14 den in Fahrtrichtung vor dem Fahrzeug 10 liegenden Bereich umfasst. Im Sichtbereich 14 befinden sich als bewegte Gegenstände zwei sich bewegende Lastwagen 16 und 18, die durch die Rechtecke mit durchgezogenen Linien dargestellt sind, sowie als ortsfeste Gegenstände sechs ortsfeste Pfähle 20, 22, 24, 26, 28 und 30.

Der Laserscanner 12 tastet seinen Sichtbereich 14 mit einem umlaufenden, gepulsten Strahlungsbündel 32 ab und erfasst die Position von Gegenstandsbereichen auf den Gegenständen 16, 18, 20, 22, 24, 26, 28 und 30, an denen ein Puls des Strahlungsbündels 32 reflektiert wurde. Beispielhaft sind in Fig. 1 nur stellvertretend für alle erfassten Gegenstandsbereiche in geringer Anzahl Gegenstandsbereiche 34 auf dem Lastwagen 16 bzw. 36 auf dem Lastkraftwagen 18 durch schwarze Kreise dargestellt. Die Ausdehnung der Gegenstandsbereiche entspricht dabei im Wesentlichen der Ausdehnung des Strahlungsbündels 32 am Ort der Reflexion.

Die Erfassung der Positionen erfolgt anhand des auf eine Bezugsrichtung des Laserscanners 12 bezogenen Winkels, unter welchem der Strahlungspuls ausgesandt bzw. empfangen wurde, und dem Abstand zum Laserscanner 12, der sich aus der Laufzeit des Strahlungspulses von der Abstrahlung bis zum Empfang nach der Reflexion ergibt. Die Abtastung erfolgt daher in einer Abtastebene, die im Wesentlichen parallel zu einer ersten Ebene ist, in der sich das Fahrzeug 10 bewegt. In dieser Abtastebene, die der zweiten Ebene im Sinne der Erfindung entspricht, liegen daher auch die Relativpositionen und von diesen abgeleitete Relativgeschwindigkeiten. Bei einer Abtastung des Sichtbereichs 14 wird somit ein tiefenaufgelöstes Bild erfasst, das die bei der Abtastung erfassten Bildpunkte umfasst, die zumindest die Koordinaten der Gegenstandsbereiche in einem Sensorkoordinatensystem enthalten, an denen das Strahlungsbündel 32 reflektiert wurde. Die Aktualisierung der vollständigen Bilder erfolgt in einem konstanten zeitlichen Abstand T.

Die von dem Laserscanner 12 erfassten Bilder werden, gegebenenfalls nach einer Korrektur der Koordinaten der Bildpunkte, an eine mit dem Laserscanner 12 verbundene Datenverarbeitungseinrichtung 38 in dem Fahrzeug 10 ausgegeben, in der eine Weiterverarbeitung der Bilder stattfindet. Die Datenverarbeitungseinrichtung 38 weist dazu, in den Figuren nicht gezeigt, einen Prozessor und einen Speicher sowie eine Schnittstelle zur Übertragung der Daten von dem Laserscanner 12 auf. Weiterhin ist eine Schnittstelle zur Ausgabe von Daten an andere Datenverarbeitungseinrichtungen in dem Fahrzeug 10 vorgesehen, die jedoch ebenfalls in den Figuren nicht gezeigt sind.

Für die im Folgenden beschriebenen bevorzugten Ausführungsformen der Erfindung werden zwei Bezugssysteme und darin jeweils ein kartesisches Koordinatensystem verwendet, die im wesentlichen parallel zu der Ebene, in der sich das Fahrzeug 10 bewegt, und zu der Abtastebene, in der Positionen von Gegenständen oder Gegenstandsbereichen erfassbar sind, angeordnet sind.

In einem im Folgenden als Weltbezugssystem bezeichneten, relativ zu den Pfählen 20, 22, 24, 26, 28 und 30 ortsfesten Bezugssystem ist ein ortsfestes kartesisches Weltkoordinatensystem mit Koordinatenachsen $X_G$ und $Y_G$ vorgesehen. Komponenten von Vektoren bezüglich dieses Weltkoordinatensystems sowie andere kinematische Größen in dem Weltkoordinatensystem werden mit einem Superskript "G" gekennzeichnet. Insbesondere werden eine Position und eine Geschwindigkeit eines Gegenstands mit dem Bezugszeichen i mit $s_i^G$ und $v_i^G$ bezeichnet. Die Position $s_i^G$ bzw. die Geschwindigkeit $v_i^G$ hat dann Koordinaten $s_{ix}^G$, $s_{iy}^G$ bzw. $v_{ix}^G$ bzw. $v_{iy}^G$. Die in diesem Weltbezugssystem ortsfesten Pfähle 20, 22, 24, 26, 28 und 30 stellen ortsfeste Gegenstände im Sinne der Erfindung dar, während die Lastwagen 16 und 18 als bewegte Gegenstände anzusehen sind.

Weiterhin ist ein mit dem Fahrzeug 10 starr mitbewegtes, d.h. insbesondere auch mitgedrehtes Fahrzeugbezugssystem mit einem kartesischen Fahrzeugkoordinatensystem mit Achsen X und Y vorgesehen. Der Ursprung des Fahrzeugkoordinatensystems ist im Beispiel im Schwerpunkt des Fahrzeugs 10 angeordnet, so dass der Schwerpunkt als Referenzpunkt dient, relativ zu dem Positionen in dem Fahrzeugkoordinatensystem als Relativpositionen gegeben sind. Das Fahrzeugkoordinatensystem hat die gleiche Ausrichtung wie das Sensorkoordinatensystem des Laserscanners 12 ist aber um einen bekannten Vektor gegenüber diesem verschoben. Die X-Achse dient als fest mit dem Fahrzeug 10 verbundene Referenzrichtung des Fahrzeugs 10. In Sinne der Erfindung sind eine erste Bezugsrichtung X durch die X-Achse und eine zweite, zu der ersten orthogonale Bezugsrichtung Y durch die Y-Achse definiert.

Vektoren und andere kinematische Größen in dem Fahrzeugkoordinatensystem werden ohne Angabe eines Superskripts angegeben, wobei ansonsten die Notation beibehalten wird, die auch im Weltkoordinatensystem verwendet wird.

Die Verfahren in den folgenden Ausführungsbeispielen beruhen auf im Folgenden beschriebenen Relationen zwischen kinematischen Größen der bewegten Gegenstände, d.h. der Lastkraftwagen 16 und 18, und der ortsfesten Gegenstände, d.h. der Pfähle 20, 22, 24, 26, 28 und 30, und dem Fahrzeug 10.

In dem Weltkoordinatensystem ist die Bewegung des Fahrzeugs 10 durch eine Bewegung seines Schwerpunkts $s_{10}^G$ entlang einer durch einen Fahrer des Fahrzeugs beeinflussbaren Bahn mit einer Eigenbahngeschwindigkeit $v_{10}^G$ und durch eine Rotation des Fahrzeugs 10, d.h. der Referenzrichtung, um eine durch den Schwerpunkt verlaufende Hochachse, d.h. eine Gierbewegung, mit einer Momentanwinkelgeschwindigkeit $\omega_{10}^G$ gegeben, die im Folgenden nur

mit $\omega^G$ bezeichnet wird. Die Pfähle 20, 22, 24, 26, 28 und 30 an Positionen $s_{20}{}^G$, $s_{22}{}^G$, $S_{24}{}^G$, $s_{26}{}^G$, $s_{28}{}^G$ und $s_{30}{}^G$ haben als ortsfeste Gegenstände die Geschwindigkeiten $v_{20}{}^G = v_{22}{}^G = v_{24}{}^G = v_{26}{}^G = v_{28}{}^G = V_{30}{}^G = 0$. Die Lastkraftwagen befinden sich an Positionen $s_{16}{}^G$ und $s_{18}{}^G$ und bewegen sich mit Geschwindigkeiten $v_{16}{}^G$ und $v_{18}{}^G$, die nicht Null sind.

In dem mit dem Fahrzeug 10 mitbewegten Fahrzeugbezugs- bzw. -koordinatensystem weisen die Gegenstände andere, im Folgenden als Relativpositionen bezeichnete Positionen, die sich auf den Schwerpunkt des Fahrzeugs 10 als Koordinatenursprung und damit als Referenzpunkt beziehen, sowie im Folgenden als Relativgeschwindigkeiten definierte Geschwindigkeiten auf. Von diesen ist in Fig. 1 beispielhaft und qualitativ nur die Relativgeschwindigkeit $v_{20}$ gezeigt.

Die Relativpositionen und die Relativgeschwindigkeiten der Gegenstände mit Bezugszeichen i zum Zeitpunkt t ergeben sich aus den Positionen und den Geschwindigkeiten in dem Weltkoordinatensystem unter Berücksichtigung der Bahnbewegung und der Rotation des Fahrzeugs und damit des Fahrzeugkoordinatensystems anhand der folgenden Gleichungen

$$s_{ix} = (s_{ix}{}^G - s_{10x}{}^G)\cos(\Psi(t)) + (s_{iy}{}^G - s_{10y}{}^G)\sin(\Psi(t))$$

$$s_{iy} = -(s_{ix}{}^G - s_{10x}{}^G)\sin(\Psi(t)) + (s_{iy}{}^G - s_{10y}{}^G)\cos(\Psi(t))$$

$$v_{ix} = (v_{ix}{}^G - v_{10x}{}^G)\cos(\Psi(t)) + (v_{iy}{}^G - v_{10y}{}^G)\sin(\Psi(t))$$
$$- \omega \{-(s_{ix}{}^G - s_{10x}{}^G)\sin(\Psi(t)) + (s_{iy}{}^G - s_{10y}{}^G)\cos(\Psi(t))\}$$
$$= u_{ix} - \omega\, s_{iy}$$

$$v_{iy} = -(v_{ix}{}^G - v_{10x}{}^G)\sin(\Psi(t)) + (v_{iy}{}^G - v_{10y}{}^G)\cos(\Psi(t))$$
$$+ \omega \{(s_{iy}{}^G - s_{10y}{}^G)\cos(\Psi(t)) + (s_{iy}{}^G - s_{10y}{}^G)\sin(\Psi(t))\}$$
$$= u_{iy} + \omega\, s_{ix}$$

Dabei bezeichnen $\Psi(t)$ den Winkel zwischen der $X^G$- und der X-Achse im mathematisch positiven Sinne zum Zeitpunkt t und $\omega = -\omega^G = - d\Psi(t)/dt$ die augenblickliche Winkelgeschwindigkeit einer Rotationsbewegung der Gegenstände um den Koordinatenursprung des Fahrzeugkoordinatensystems, die durch die Rotation des Fahrzeugkoordinatensystems mit der Winkelgeschwindigkeit $\omega^G$ gegenüber dem Weltkoordinatensystems entsteht. Weiter sind

$$u_{ix} = (v_{ix}{}^G - v_{10x}{}^G)\cos(\Psi(t)) + (v_{iy}{}^G - v_{10y}{}^G)\sin(\Psi(t))$$

$$u_{iy} = - (v_{ix}{}^G - v_{10x}{}^G)\sin(\Psi(t)) + (v_{iy}{}^G - v_{10y}{}^G)\cos(\Psi(t))$$

die Komponenten der Differenzen der Geschwindigkeiten des Gegenstands i und des Gegenstands 10 bzw. des Fahrzeugkoordinatensystems ausgedrückt in dem Fahrzeugkoordinatensystem. Die Relativgeschwindigkeiten $v_{ix}$ bzw. $v_{iy}$ sind daher lineare Funktionen der Relativpositionen $s_{iy}$ bzw. $s_{ix}$.

Die Relativgeschwindigkeiten der Gegenstände sind also in zwei Anteile zerlegbar. Ein Rotationsanteil der Relativgeschwindigkeit, der durch den Summanden, der die Winkelgeschwindigkeit $\omega$ enthält, beschrieben wird, entspricht der Rotation aller Gegenstände um den Ursprung des Fahrzeugkoordinatensystems aufgrund der Rotation des Fahrzeugkoordinatensystems relativ zu dem Weltkoordinatensystem. Ein Translationsanteil $u_i$ der Relativgeschwindigkeit $v_i$ mit Komponenten $u_{ix}$ bzw. $u_{iy}$ entspricht einer Translationsbewegung in dem Fahrzeugkoordinatensystem, die durch eine Bewegung des Fahrzeugkoordinatensystems entlang der Bahn des Fahrzeugs 10 und die Bewegung der Gegenstände in dem Weltkoordinatensystem entsteht.

Während für die bewegten Gegenstände die Konstanten bzw. Translationsanteile $u_{ix}$ bzw. $u_{iy}$ von der Geschwindigkeit der Gegenstände in dem Weltkoordinatensystem abhängen und im allgemeinen unterschiedlich sind, ergibt sich für die ortsfesten Gegenstände wegen $v_i^G = 0$:

$$v_{ix} = U_x - \omega\, s_{iy} \qquad\qquad (1a)$$

$$v_{iy} = U_y + \omega\, s_{ix} \qquad\qquad (1b)$$

mit

$$U_x \quad = - v_{10x}^G \cos(\Psi(t)) + v_{10y}^G \sin(\Psi(t))$$

$$U_y \quad = - v_{10x}^G \sin(\Psi(t)) + v_{10y}^G \cos(\Psi(t))$$

Das bedeutet, dass eine einzige erste lineare Funktion für alle ortsfesten Gegenstände die Abhängigkeit einer Komponente $v_{ix}$ der Relativgeschwindigkeit in der ersten Bezugsrichtung X von der komplementären Komponente $s_{iy}$ der Relativposition in einer zu der ersten Bezugsrichtung orthogonalen zweiten Bezugsrichtung Y beschreibt. Entsprechend beschreibt eine einzige zweite lineare Funktion für alle ortsfesten Gegenstände die Abhängigkeit der Komponente $v_{iy}$ der Relativgeschwindigkeit in der zweiten Bezugsrichtung Y von der komplementären Komponente $s_{ix}$ der Relativposition in der ersten Bezugsrichtung X.

Die erste lineare Funktion ist dabei in einer Darstellung $v_{ix} = a_x\, s_{iy} + b_x$ parametrisiert durch zwei Relativbewegungsparameter, nämlich durch einen ersten Proportionalitätskoeffizienten $a_x$, dessen Wert das Negative der Winkelgeschwindigkeit des Rotationsanteils der Relativgeschwindigkeit der ortsfesten Gegenstände bzw. die Winkelgeschwindigkeit der Rotation des Fahrzeugs, d.h. dessen Eigenrotationsgeschwindigkeit, ist, und durch eine erste Konstante $b_x$, die gleich dem Translationsanteil $U_x$ der Relativgeschwindigkeit der ortsfesten Gegenstände in der ersten Bezugsrichtung bzw. der negativen Komponente der Eigenbahngeschwindigkeit $v_{10}^G$ des Fahrzeugs in der ersten Bezugsrichtung ist.

Die zweite lineare Funktion ist entsprechend in einer Darstellung $v_{iy} = a_y\, s_{ix} + b_y$ parametrisiert durch zwei andere Relativbewegungsparameter, nämlich durch einen zweiten Proportionalitätskoeffizienten $a_y$, der wiederum gleich der Winkelgeschwindigkeit des Rotationsanteils der Relativgeschwindigkeit der ortsfesten Gegenstände ist, und eine zweite Konstante $b_y$, die gleich dem Translationsanteil $U_y$ der Relativgeschwindigkeit der ortsfesten Gegenstände in der zweiten Bezugsrichtung bzw. der negativen Eigenbahngeschwindigkeit $v_{10}^G$ des Fahrzeugs in der zweiten Bezugsrichtung ist.

Die Gleichungen (1a) und (1b) stellen daher Modellbeziehungen im Sinne der Erfindung dar.

Durch Auffinden einer linearen Beziehung zwischen der Komponente $v_{ix}$ bzw. $v_{iy}$ der Relativgeschwindigkeit in der ersten bzw. zweiten Bezugsrichtung X bzw. Y und der komplementären Komponente $s_{iy}$ bzw. $s_{ix}$ in der zweiten bzw. ersten Bezugsrichtung Y bzw. X können daher die Relativbewegungsparameter und damit die Eigenrotationsgeschwindigkeit und die Eigenbahngeschwindigkeit des Fahrzeugs 10 ermittelt werden. Da die Relativgeschwindigkeiten und die Relativpositionen der bewegten Gegenstände diesen linearen Funktionen im allgemeinen nicht genügen, können so die bewegten von den ortsfesten Gegenständen unterschieden werden.

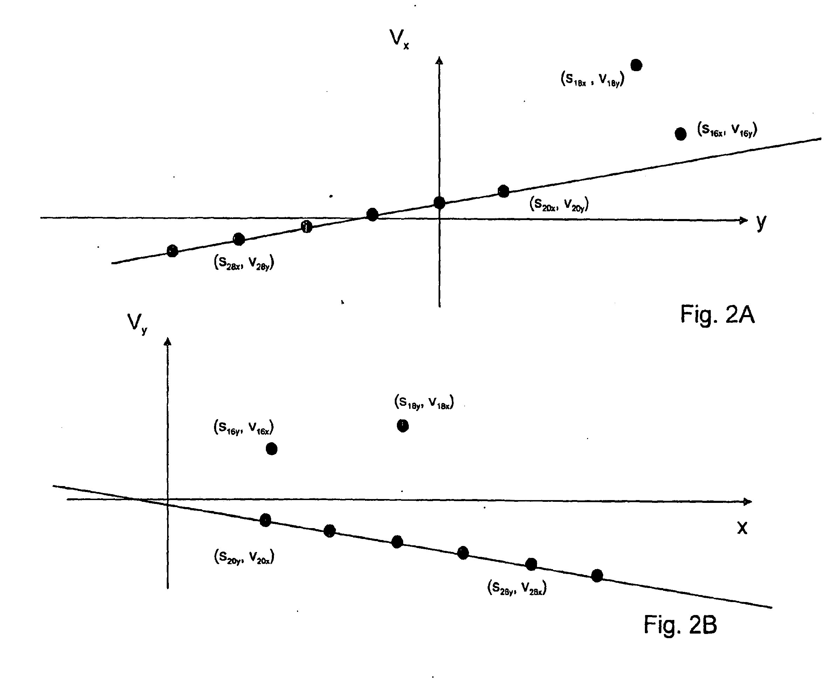

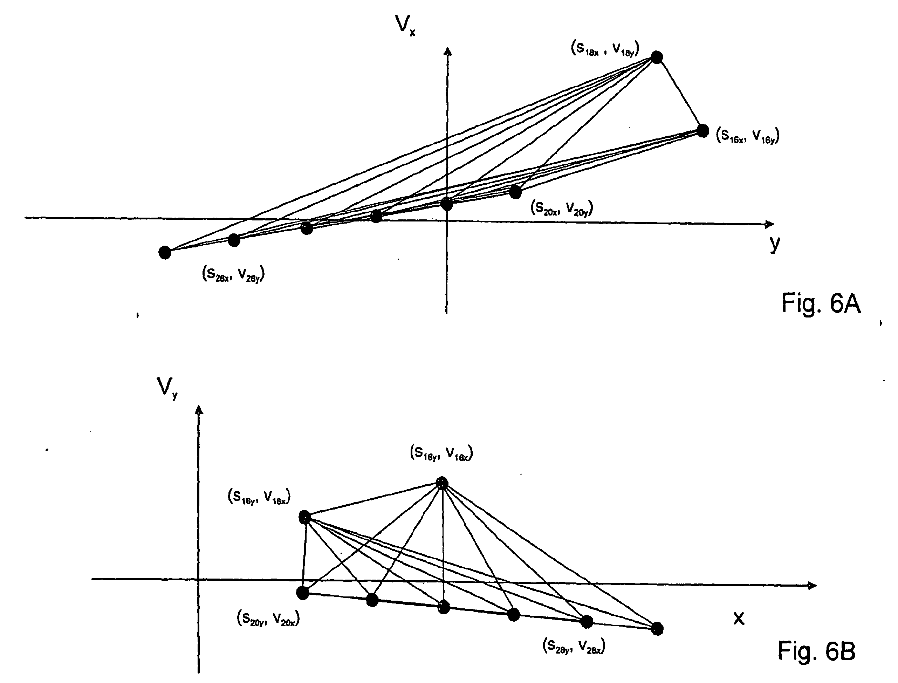

Zur graphischen Veranschaulichung (vgl. Fig. 2A und 2B) können Relativgeschwindigkeits-Relativpositionspunkten, die jeweils die Komponente $v_{ix}$ bzw. $v_{iy}$ der Relativgeschwindigkeit in der ersten bzw. zweiten Bezugsrichtung und die komplementäre Komponente $s_{iy}$ bzw. $s_{ix}$ in der zweiten bzw. ersten Bezugsrichtung enthalten, in einem entsprechenden $y$-$v_x$- bzw. $x$-$v_y$-Diagramm eingetragen werden. In den Fig. 2A, 2B und 6A, 6B ist der Übersichtlichkeit halber nur für einige Punkte die Zuordnung zu Gegenständen gekennzeichnet. Die ortsfesten Gegenständen zugeordneten Relativgeschwindigkeits-Relativpositionspunkte liegen dann auf einer Geraden, deren Steigung $a_x$ bzw. $a_y$ der negativen Winkelgeschwindigkeit $-\omega$ bzw. der Winkelgeschwindigkeit $\omega$ der ortsfesten Gegenstände in dem Fahrzeugkoordinatensystem entspricht, während deren Achsenabschnitt $b_x$ bzw. $b_y$ den Translationsanteilen der Relativgeschwindigkeit der ortsfesten Gegenstände $U_x$ bzw. $U_y$ in der ersten bzw. zweiten Bezugsrichtung entspricht. Die entsprechenden Relativgeschwindigkeits-Relativpositionspunkte der bewegten Gegenstände liegen typischerweise abseits wenigstens einer der Geraden. Durch Auffinden der Relativgeschwindigkeits-Relativpositionspunkte, die auf einer Geraden liegen, sind daher auch die ortsfesten Gegenstände ermittelbar, ohne dass diese vorher als solche bekannt zu sein brauchen.

Die eben beschriebenen Beziehungen, insbesondere (1a) und (1b), werden bei den im Folgenden beschriebenen Ausführungsformen der Erfindung verwendet. Dabei ist jedoch zu beachten, dass die Relativgeschwindigkeiten und Relativpositionen Schwankungen bzw. Fehler durch Messfehler und die Nachverarbeitung enthalten, so dass die lineare Abhängigkeit für die ortsfesten Gegenstände nur näherungsweise realisiert ist.

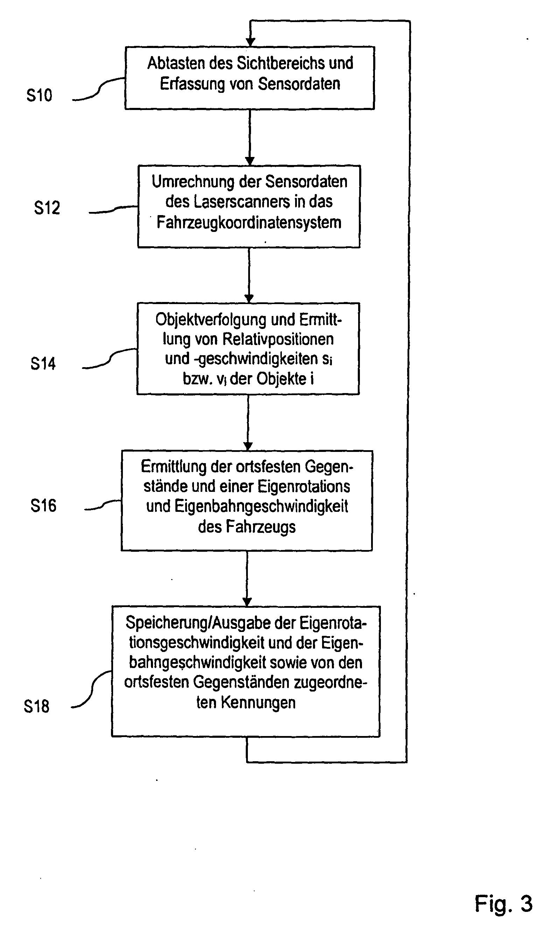

In Fig. 3 ist als Flussdiagramm eine Grundform der im Folgenden beschriebenen Ausführungsbeispiele für das erfindungsgemäße Verfahren gezeigt. Das Verfahren wird zyklisch durchgeführt, wobei in jedem Zyklus folgende Schritte ausgeführt werden: .

In Schritt S 10 wird mit dem Laserscanner 12 dessen Sichtbereich 14 abgetastet, wobei die Positionen von Gegenstandsbereichen auf den erfassten Gegenständen in dem Sensorkoordinatensystem erfasst werden.

Die folgenden Schritte werden mittels der Datenverarbeitungseinrichtung 38 ausgeführt, auf der dazu ein entsprechendes, darin gespeichertes erfindungsgemäßes Computerprogramm nach entsprechenden bevorzugten Ausführungsformen der Erfindung ausgeführt wird.

In Schritt S12 werden die Positionsdaten für die Gegenstandsbereiche in dem Sensorkoordinatensystem, gegebenenfalls nach Korrekturen, unter Verschiebung um den bekannten Abstandsvektor zwischen dem Laserscanner 12 und dem Schwerpunkt des Fahrzeugs 10 in kartesische Koordinaten in dem Fahrzeugkoordinatensystem transformiert.

In Schritt S14 wird dann auf der Basis dieser transformierten Sensordaten ein weiterer Zyklus eines zyklisch ablaufenden, bekannten Objekterkennungs- und -verfolgungsverfahrens ausgeführt, das nach einer Segmentierung der Bilder, die durch Gegenstandsbereichen entsprechende, transformierte Sensordaten gegeben sind, Objekte erkennt bzw. verfolgt, die ganzen Gegenständen entsprechen. Jedem Objekt wird als Bezugspunkt der geometrische Schwerpunkt der das Objekt definierenden Gegenstandsbereiche zugeordnet, der in Fig. 1 durch Kreuze dargestellt ist.

Jedem Objekt werden dabei für einen aktuellen Zeitpunkt eine Relativposition und eine Relativgeschwindigkeit, die sich aus der Differenz zwischen der aktuellen Relativposition und der Relativposition in dem vorhergehenden Zyklus sowie dem zeitlichen Abstand T aufeinanderfolgender Abtastungen ergibt, zugeordnet. Die Relativposition und -geschwindigkeit eines Objekts bilden als dem Gegenstand zugeordnete Daten einen Datensatz, welcher dem dem Objekt entsprechenden Gegenstand zugeordnet ist.

In Schritt S16 werden dann die ortsfesten Gegenstände sowie der erste und der zweite Proportionalitätskoeffizient und die erste und die zweite Konstante ermittelt. Dazu werden auf der Basis der oben genannten Beziehung Werte für die Relativbewegungsparameter, d.h. die Proportionalitätskoeffizienten und die entsprechenden Konstanten für die erste und eine zweite lineare Funktion, die für die ortsfesten Gegenstände mit einer vorgegebenen Genauigkeit eine lineare Abhängigkeit zwischen den Komponenten der Relativgeschwindigkeit in der ersten bzw. zweiten Bezugsrichtung X bzw. Y und den komplementären Komponenten der Relativpositionen in der zweiten bzw. ersten Bezugsrichtung Y bzw. X wiedergeben, ermittelt.

Aus dem ersten und zweiten Proportionalitätskoeffizient, die unter Beachtung des Vorzeichens der Winkelgeschwindigkeit der ortsfesten Gegenstände in dem Fahrzeugkoordinatensystem entsprechen, wird unter Beachtung der Vorzeichen ein Mittelwert gebildet, der entsprechend einer Güte, mit welcher der jeweilige Proportionalitätskoeffizient bestimmt wurde, gewichtet werden kann. Die Eigenrotationsgeschwindigkeit $\omega^G$ im Weltkoordinatensystem, mit der sich das Fahrzeug 10 bzw. das damit verbundene Fahrzeugkoordinatensystem mit der X-Achse als Referenzrichtung um den durch den Schwerpunkt des Fahrzeugs gegebenen Referenzpunkt dreht, wird dann aus dem Mittelwert für $\omega$ durch Vorzeichenumkehr erhalten.

Aus der ersten und zweiten Konstante werden als Relativbewegungsparameter die Translationsanteile $U_x$ bzw. $U_y$ der Relativgeschwindigkeiten der ortsfesten Gegenstände in der ersten bzw. zweiten Bezugsrichtung X bzw. Y gebildet. Aus diesen wird dann durch Vorzeichenumkehr die Eigenbahngeschwindigkeit des Fahrzeugs 10, ausgedrückt im Fahrzeugkoordinatensytem, bestimmt, welche die Bewegung des Fahrzeugs 10 bzw. des Schwerpunkts als Referenzpunkt unabhängig von dessen Orientierung in dem Weltkoordinatensystem wiedergibt.

Es werden dann in Schritt S18 die Eigenrotationsgeschwindigkeit und die Eigenbahngeschwindigkeit gespeichert bzw. an andere Einrichtungen, beispielsweise eine elektronische Fahrdynamikregelung, ausgegeben. Weiterhin werden Kennungen der Objekte gespeichert, die ortsfesten Gegenständen entsprechen, um diese Information bei der Objekterkennung, -klassifizierung und -verfolgung berücksichtigen zu können.

Wie die für die Verfahren verwendeten Beziehungen, insbesondere Gleichungen (1a) und(1b), zeigen, sind die Verfahren für beliebige Relativbewegungen zwischen dem Sensor bzw. dem Fahrzeug und den Gegenständen verwendbar. Insbesondere kann sich das Fahrzeug bzw. der an diesem befestigte Sensor auf die ortsfesten Gegenstände zu oder von diesen weg bewegen. Nur zur Veranschaulichung der Arbeitsweise sind in den Fig. 2A, 2B, 6A, 6B, 7A und 7B in den Verfahren verwendet Größen für eine mögliche Bewegung des Fahrzeugs schematisch dargestellt. Andere Eigenbewegungen in beliebigen anderen Richtungen können auf der Basis entsprechender Daten mit den erfindungsgemäßen Verfahren ebenso ermittelt werden.

Bei einem ersten Ausführungsbeispiel werden in Schritt S16 in einem ersten Teilschritt in dem Objektverfolgungsverfahren aufgrund einer Objekterkennung und -klassifizierung ortsfeste Gegenstände erkannt. Es werden dann für die Menge von Relativgeschwindigkeits-Relativpositionskoordinaten $(s_{ix}, v_{iy})$ bzw. $(s_{iy}, v_{ix})$ von ortsfesten Objekten bzw. Gegenständen, lineare Regressionen zur Bestimmung des Proportionalitätskoeffizienten, d.h. der negativen Winkelgeschwindigkeit $-\omega$ bzw. der Winkelgeschwindigkeit $\omega$, und der Translationsanteile $U_x$ bzw. $U_y$ der Relativgeschwindigkeiten der ortsfesten Gegenstände in der ersten bzw. zweiten Bezugsrichtung X bzw. Y durchgeführt. Das Ergebnis der linearen Regression ist in den Fig. 2A und 2B als Gerade veranschaulicht, die ausgleichend durch die den ortsfesten Gegenständen entsprechenden $(s_{ix}, v_{iy})$- bzw. $(s_{iy}, v_{ix})$-Punkte gelegt ist.

Aus den beiden Werten für die Winkelgeschwindigkeit wird ein gewichteter Mittelwert gebildet, wobei die Wichtung mittels des Kehrwerts des mittleren quadratischen Fehlers der beiden linearen Regressionen erfolgt.

Die Eigenrotationsgeschwindigkeit und die Eigenbahngeschwindigkeit werden wie in den Erläuterungen zu Schritt S16 bereits ausgeführt berechnet.

Das Verfahren wird dann mit Schritt S18 fortgesetzt.

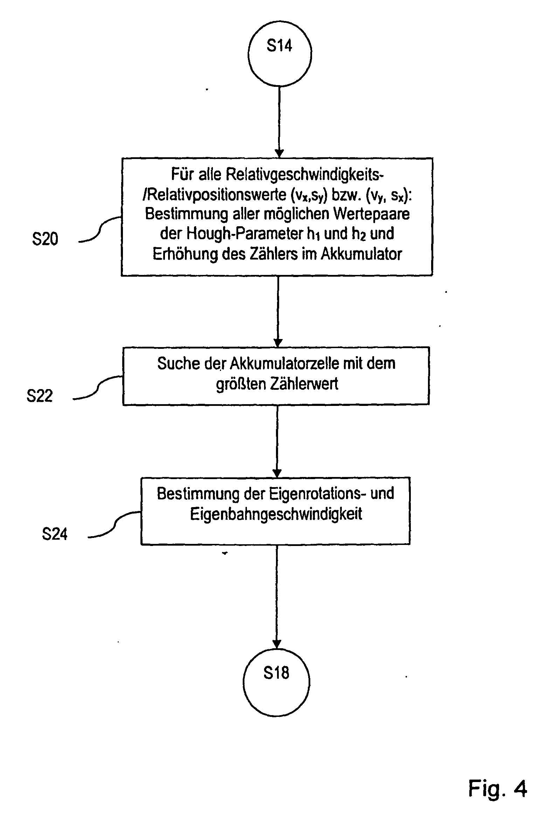

Bei einer zweiten Ausführungsform des erfindungsgemäßen Verfahrens, deren Ablauf teilweise in Fig. 4 schematisch dargestellt ist, wird in Schritt S16 statt einer Erkennung der ortsfesten Gegenstände mittels der Objektverfolgung und einer linearen Regression eine Hough-Transformation durchgeführt. Die Durchführung einer Hough-Transformation zur Geradenerkennung ist in der eingangs zitierten Literatur genauer beschrieben, so dass hier das Verfahren nur in seinen wesentlichen Zügen wiedergegeben wird (vgl. Fig. 4). Das Verfahren wird für die Beziehungen zwischen $v_{ix}$ und $s_{iy}$ bzw. zwischen $v_{iy}$ und $s_{ix}$ separat angewendet und daher nur für die erste Beziehung erläutert.

Ausgehend von Schritt S14 werden in Teilschritt S20 die ersten Schritte der Hough-Transformation durchgeführt.

Zur Definition eines Hough-Raums wird eine Parametrisierung von Geraden mit einem Wertepaar enthaltend einen Proportionalitätskoeffizienten bzw. eine Steigung und eine Konstante bzw. einen Achsenabschnitt verwendet, wobei der Proportionalitätskoeffizient und die Konstante als erster bzw. zweiter Hough-Parameter $h_1$ bzw. $h_2$ bezeichnet werden. Der Hough-Raum wird dann beispielsweise durch ein Produkt von endlichen Intervallen für den ersten bzw. zweiten Hough-Parameter gegeben, wobei die Intervall-Grenzen jeweils durch die physikalisch maximal möglichen Parameterwerte gegeben sind, welche die Hough-Parameter annehmen können. Bei einer Alternative werden die in einem vorhergehenden Zyklus bestimmten Werte für den Proportionalitätskoeffizient, d.h. der negativen Winkelgeschwindigkeit, und die Konstante, d.h. der Translationsanteil der Relativgeschwindigkeit in Richtung der X-Achse, jeweils als Mittelpunkt der Intervalle gewählt, wobei die Intervalllänge durch die maximal möglichen Bewegungsänderungen des Fahrzeugs 10 gegeben ist. Das Verfahren ist so erheblich schneller ausführbar.

Der so festgelegte Hough-Raums wird dann in Zellen eingeteilt, deren Weite sich aus einer entsprechenden Diskretisierung der Intervalle für die Hough-Parameter ergibt. Die Weiten der Zellen sind durch einen Kompromiss zwischen hohen Genauigkeitsanforderungen für die zu bestimmenden Parameter, einer guten Trennung von ortsfesten und bewegten Gegenständen, die kleine Zellen erfordern, und schneller Verfahrensdurchführung, die bei großen Zellen gegeben ist, bestimmbar.

Jeder Zelle des Hough-Raums, d.h. jeder entsprechenden Kombination von Werten der Hough-Parameter, wird ein Zähler zugeordnet, so dass ein Akkumulatorfeld entsteht, dessen Feldparameter durch die Hough-Parameter gegeben sind.

Es werden dann für alle $(s_{ix}, v_{iy})$-Paare, d.h. für alle Datensätze bzw. Gegenstände oder Objekte i, alle möglichen Geraden berechnet, die durch das $(s_{ix}, v_{iy})$-Paar führen. Für jeden der diskreten Werte des ersten Hough-Parameters $h_1$ in dem entsprechenden Intervall werden diesen Geraden entsprechende Werte für den Hough-Parameter $h_2$ gemäß der Formel

$$h_2 = v_{ix} - h_1 \, s_{iy}$$

berechnet, und der Akkumulator für die Zelle, in der die Werte für $h_1$ und $h_2$ liegen, um Eins erhöht.

In Teilschritt S22 wird dann in dem Akkumulatorfeld die Zelle gesucht, für die der Akkumulator den höchsten Wert aufweist. Hierbei kann wiederum die Suche in einer Zelle beginnen, der bei dem vorausgehenden Zyklus der höchste Zählerwert zugeordnet war, da man annehmen kann, dass sich die Eigenbewegung des Fahrzeugs 10 seit dem letzten Zyklus nicht wesentlich geändert hat.

Die $(s_{ix}, v_{iy})$-Werte ortsfester Gegenstände bzw. Objekte i liegen dann auf der Geraden, die durch die Hough-Parameter derjenigen Zelle, welcher der höchste Zählwert zugeordnet ist, definiert ist, bzw. in unmittelbarer Nachbarschaft derselben.

In Teilschritt S24 werden dann als erster Wert der Winkelgeschwindigkeit $\omega$ der negative Wert des ersten Hough-Parameters $h_1$ derjenigen Zelle, welcher der höchste Zählwert zugeordnet ist, und als Translationsanteil der Relativgeschwindigkeit der ortsfesten Gegenstände in der ersten Bezugsrichtung der Wert des zweiten Hough-Para-

meters $h_2$ derselben Zelle bestimmt. Eine Kennzeichnung dieser Zelle bzw. die dieser zugeordneten Werte der Hough-Parameter werden zur Verwendung in einem nächsten Zyklus gespeichert.

Weiterhin können bei bekannten Werten der Hough-Parameter der so ermittelten Geraden die ortsfesten Gegenstände dadurch ermittelt werden, dass sie einen Abstand von der ermittelten Geraden aufweisen, der kleiner als ein maximaler vorgegebener Abstand ist. Der vorgegebene Abstand ist dabei unter anderem in Abhängigkeit von der Größe der Zellen bestimmbar. In diesem Beispiel hängt daher die vorgegebene Genauigkeit direkt mit der Zellenweite und dem vorgegebenen Abstand zusammen, da alle Gegenstände, die Hough-Parameterwerten in der Zelle entsprechen, und die Gegenstände, deren Relativpositionen und -geschwindigkeiten innerhalb des vorgegebenen Abstands von der ermittelten Geraden liegen, als ortsfest angesehen werden.

Insgesamt wird damit die größte Gruppe von Datensätzen bestimmt, für die mit der vorgegebenen Genauigkeit ein Zusammenhang zwischen der Relativgeschwindigkeit in der ersten Bezugsrichtung und der Relativposition in der zweiten Bezugsrichtung durch eine lineare Funktion approximierbar ist.

In den Teilschritten S20 bis S24 werden die beschriebenen Operationen analog auch für die Komponente $v_{iy}$ der Relativgeschwindigkeit in der zweiten Bezugsrichtung Y und die Komponente $s_{ix}$ der Relativposition in der ersten Bezugsrichtung X durchgeführt. Dabei werden ein zweiter Wert für die Winkelgeschwindigkeit $\omega$ durch den Wert des ersten Hough-Parameters der Zelle mit dem höchsten Zählerwert und ein Wert für den Translationsanteil der Relativgeschwindigkeit $U_y$ der ortsfesten Gegenstände in der zweiten Bezugsrichtung Y durch den Wert des zweiten Hough-Parameters $h_2$ derselben Zelle bestimmt.

Als Endwert für die Winkelgeschwindigkeit wird der arithmetische Mittelwert des ersten und des zweiten Wertes für die Winkelgeschwindigkeit verwendet. Durch Vorzeichenumkehr ergibt sich dann wie zuvor die Eigenrotationsgeschwindigkeit $\omega^G$. Ebenfalls wie zuvor ergibt sich die Eigenbahngeschwindigkeit aus den Translationsanteilen $U_x$ bzw. $U_y$ der gemeinsamen Relativgeschwindigkeiten der ortsfesten Gegenstände.

Das Verfahren kann dann mit Schritt S18 fortgesetzt werden.

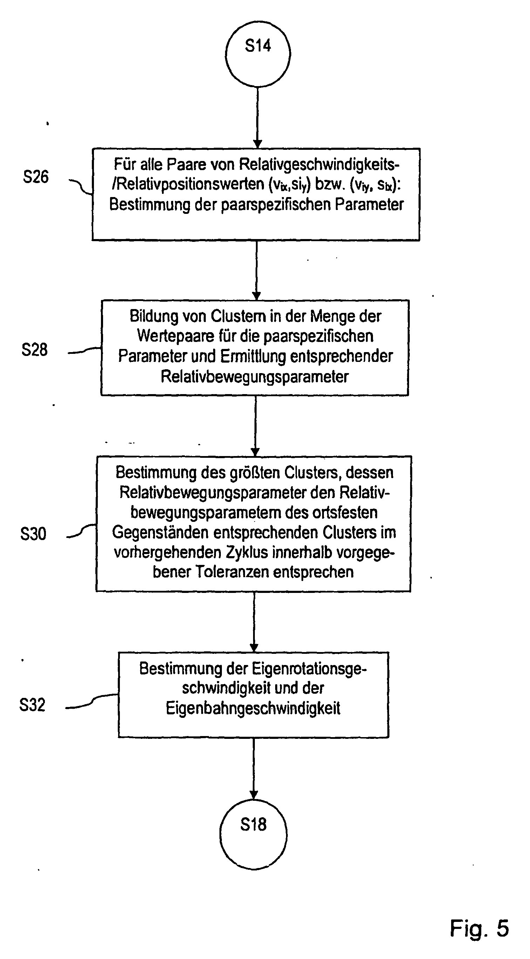

Bei einem Verfahren nach einer dritten bevorzugten Ausführungsform der Erfindung wird die Ermittlung der ortsfesten Gegenstände, der Eigenrotationsgeschwindigkeit und der Eigenbahngeschwindigkeit des Fahrzeugs in Schritt S16 durch das im Folgenden geschilderte, in Fig. 5 schematisch dargestellte Teilverfahren ermittelt.

In Teilschritt S26 werden für alle Paare von Datensätzen, d.h. hier Gegenständen, i und j Werte zweier paarspezifischer Parameter $a_{ij}$ und $b_{ij}$ bestimmt, die eine lineare paarspezifische Funktion parametrisieren. Die paarspezifische Funktion gibt exakt den Zusammenhang zwischen der Komponente $v_{kx}$ der Relativgeschwindigkeit in der ersten Bezugsrichtung X und der Komponente $s_{ky}$ der Relativposition in der zweiten Bezugsrichtung Y für k= i und j an. Der erste paarspezifische Parameter $a_{ij}$ ist dabei der lineare Koeffizient bzw. Proportionalitätskoeffizient der linearen Funktion, während der zweite paarspezifische Parameter $b_{ij}$ die Konstante der linearen Funktion ist.

Anschaulich bedeutet dies, wie in Fig. 6A schematisch gezeigt, folgendes: In einem kartesisches $y$-$v_x$-Koordinatensystem, in dem für alle Gegenstände die Wertepaare $(s_{ix}, v_{iy})$ eingetragen sind, werden paarspezifische Geraden durch alle Datensätzen bzw. Gegenständen i und j zugeordneten Paare von Wertepaaren $(s_{ix}, v_{iy})$ und $(s_{jx}, v_{jy})$ gelegt. Daraufhin werden die Steigung $a_{ij}$ und der Achsenabschnitt $b_{ij}$ der Geraden bestimmt.

Die Wertepaare, die mit einer vorgegebenen Genauigkeit durch eine einzige lineare Funktion approximierbar sind, weisen dann entsprechend der vorgegebenen Genauigkeit ähnliche Werte der ersten und zweiten paarspezifischen Parameter auf.

In den Teilschritten S28 und S30 werden die bestimmten ersten paarspezifischen Parameter $a_{ij}$ und zweiten paarspezifischen Parameter $b_{ij}$ einer Clusteranalyse unterzogen, bei der in Schritt S28 zunächst Cluster gesucht werden, die paarspezifische Parameterpaare $(b_{ij}, a_{ij})$ mit ähnlichen Werten enthalten.

Die Clusterbildung ist dabei von einem Wert eines Clusterbildungsparameters abhängig, von dem unter anderem abhängt, ob ein paarspezifisches Parameterpaar $(b_{ij}, a_{ij})$ als einem Cluster zugehörig angesehen wird oder nicht, d.h. ob die Werte der paarspezifischen Parameterpaare hinreichend ähnlich sind. Der Wert dieses Clusterbildungsparameters wird in Abhängigkeit von der vorgegebenen Genauigkeit bestimmt, mit der die Abhängigkeit zwischen der Komponente der Relativgeschwindigkeit in der ersten Bezugsrichtung X und der dazu komplementären Komponente der Relativposition in der zweiten Bezugsrichtung Y durch eine lineare Funktion wiedergebbar sein soll.

Die Clusterbildung kann beispielsweise folgendermaßen erfolgen: Es werden die tatsächlich auftretenden Extremwerte der ersten und zweiten paarspezifischen Parameter bestimmt. Danach wird ein Produktraum, gebildet aus den Intervallen für den ersten und zweiten paarspezifischen Parameter, die sich jeweils zwischen den entsprechenden Extremwerten erstrecken, in Zellen vorgegebener, durch die vorgegebene Genauigkeit bestimmter Größe aufgeteilt.

In einem iterativen Verfahren wird ausgehend von derjenigen Zelle, welche die bei einem vorhergehenden Zyklus der Eigenbewegungsermittlung ermittelten Werte für das Cluster mit den meisten Elementen enthielt, eine Zelle gesucht, die wenigstens ein paarspezifisches Parameterpaar enthält. Diese bildet dann ein Cluster in der ersten Iteration. In folgenden Iterationen werden dann diejenigen dem Cluster benachbarten Zellen gesucht, die wenigstens ein weiteres paarspezifisches Parameterpaar enthalten. Die Erweiterung des Clusters wird beendet, wenn in zu dem Cluster benachbarten Zellen keine weiteren paarspezifischen Parameterpaare mehr gefunden werden.

Sind nicht alle paarspezifischen Parameterpaare in dem Cluster enthalten, so wird eine weitere Zelle gesucht, die ein noch keinem Cluster zugeordnetes paarspezifischen Parameterpaar enthält. Aus dieser Zelle wird ein neues Cluster gebildet. In folgenden Iterationen werden dann diejenigen dem Cluster benachbarten Zellen gesucht, die wenigstens ein weiteres paarspezifisches Parameterpaar enthalten. Die Erweiterung des Clusters wird beendet, wenn in dem Cluster benachbarten Zellen keine weiteren paarspezifischen Parameterpaare mehr gefunden werden. Sind alle paarspezifischen Parameterpaare Clustern zugeordnet, wird die Clusterbildung beendet, sonst wird nach einer Zelle für ein neues Cluster gesucht und eine weitere Iteration durchgeführt, in der das neue Cluster gebildet wird.

Die Cluster entsprechen Gruppen von Datensätzen, für die ein Zusammenhang zwischen der Komponente der Relativgeschwindigkeit in der ersten Bezugsrichtung und der Komponenten der Relativposition in der zweiten Bezugsrichtung durch eine lineare Funktion mit der vorgegebenen Genauigkeit approximierbar sind.

In Schritt S30 wird dann die größte Gruppe unter den Gruppen von Datensätzen gesucht, die dem Kriterium genügen, dass deren Relativbewegungsparameter von den Relativbewegungsparametern der ortsfesten Gegenständen in dem vorhergehenden Zyklus entsprechenden Gruppe von Datensätzen um weniger als entsprechende vorgegebene Beträge abweichen. Für den Proportionalitätskoeffizienten ist dieser Betrag in Abhängigkeit von dem Trägheitsmoment des Fahrzeugs 10 für Drehungen um seine Hochachse durch den Schwerpunkt und maximal zu erwartende Drehmomente auf das Fahrzeug 10 sowie für die Konstante in Abhängigkeit von der Masse des Fahrzeugs und den maximal zu erwartenden Kräften auf das Fahrzeug 10 gewählt. Da jeder Gruppe ein Cluster entspricht werden zunächst die Cluster in absteigender Reihenfolge ihrer Größe, d.h. der Anzahl der darin enthaltenen paarspezifischen Parameterpaare $(b_{ij}, a_{ij})$ geordnet.

In absteigender Reihenfolge werden dann für jedes Cluster bzw. jede Gruppe als Relativbewegungsparameter ein erster Proportionalitätskoeffizient $a_x$, welcher der negativen Winkelgeschwindigkeit entspricht, und die Konstante $b_x$, die dem Translationsanteil $U_x$ der gemeinsamen Relativgeschwindigkeit der den Datensätzen des Clusters zugeordneten Gegenstände in der ersten Bezugsrichtung X entspricht, durch Mittelwertbildung über die ersten bzw. zweiten paarspezifischen Parameter der paarspezifischen Parameterpaare des Cluster mit den meisten Elementen berechnet. Alternativ können sie durch lineare Regression für die den ortsfesten Gegenständen zugeordneten $(s_{ix}, v_{iy})$-Paare ermittelt werden. Sodann wird als Kriterium für das Vorliegen der Gruppe ortsfestere Gegenstände geprüft, ob die so ermittelten Relativbewegungsparameter von den Relativbewegungsparametern der ortsfesten Gegenständen zugeordneten Gruppe von Datensätzen in dem vorhergehenden Zyklus um weniger als die vorgegebenen Beträge abweichen. Ist dies der Fall, wird die Suche abgebrochen, das zuletzt betrachtete Cluster bzw. die zugehörige Gruppe von Datensätzen ist dann die ortsfesten Gegenständen zugeordnete Gruppe.

Im ersten Zyklus wird davon ausgegangen, dass das Fahrzeug steht, so dass als Kriterium geprüft wird, ob die Beträge Relativbewegungsparameter kleiner als die entsprechenden vorgegebenen Beträge sind. Im nächsten Zyklus wird dann auf das zuvor geschilderte Kriterium gewechselt.

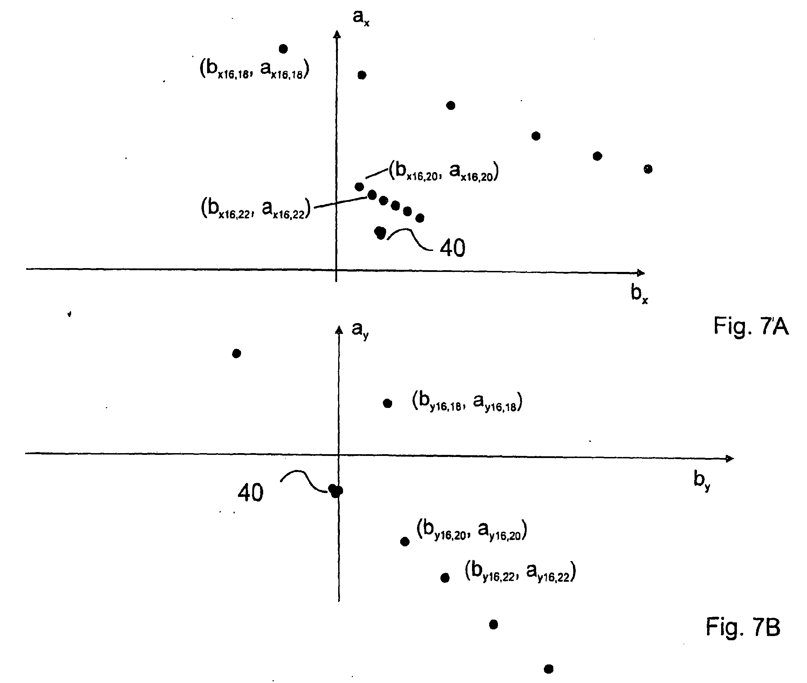

In einer geometrischen Darstellung, die in Fig. 7A schematisch gezeigt ist, bedeutet dies, dass in einem $b_x$-$a_x$-Diagramm, in das den $b_{ij}$- und $a_{ij}$-Werten der Paare i,j entsprechende Punkte eingetragen sind, Anhäufungen bzw. Cluster von Punkten auftreten, wobei häufig, wie in Fig. 7A, sogar nur ein Cluster 40 gebildet wird, das dementsprechend einfach aufzufinden ist. In Fig. 7A sind weniger paarspezifische Parameterpaare $(b_{ij}, a_{ij})$ zu erkennen als Paare von Punkten in Fig. 6A, da einige der den paarspezifischen Parameterpaaren $(b_{ij}, a_{ij})$ entsprechenden das Cluster 40 bildende Punkte in der Fig. 7A nicht unterscheidbar übereinanderliegen und andere außerhalb des Zeichenbereichs liegen.

Alle Objekte bzw. Gegenstände i bzw. j, denen in dem Cluster mit den meisten Elementen, dessen Relativbewegungsparameter denen des Clusters für ortsfeste Gegenstände im vorhergehenden Zyklus hinreichend ähnlich sind, Paare $(b_{ij}, a_{ij})$ entsprechen, sind ortsfeste Gegenstände, da die paarspezifischen Funktionen, die den Zusammenhang zwischen der Komponente der Relativgeschwindigkeit in der ersten Bezugsrichtung und der dazu komplementären Komponente der Relativposition in der zweiten Bezugsrichtung wiedergegeben, hinreichend ähnlich sind.

In der geometrischen Darstellung bedeutet dies zum einen, dass die entsprechenden paarspezifischen Geraden entsprechend der vorgegebenen Genauigkeit in dem Bereich der Punkte $(s_{ix}, v_{iy})$, die ortsfesten Gegenständen zugeordnet sind, im Wesentlichen parallel und eng benachbart zueinander liegen. Zum anderen bewegt sich das ortsfesten Gegenständen entsprechende Cluster von einem Zyklus zum nächsten entsprechend den vorgegebenen Beträgen nicht oder wenig in dem Diagramm.

Dieses Verfahren zur Bestimmung der ortsfesten Gegenstände arbeitet mit einer überraschend großen Trennschärfe, die unter anderem darauf zurückzuführen ist, dass, wenn N die Anzahl der ortsfesten Gegenständen zugeordneten Datensätze ist, N(N-1)/2 paarspezifische Parameterpaare bzw. Geraden auftreten, die im Wesentlich gleich bzw. ähnlich zueinander sind. Dadurch ergibt sich ein den ortsfesten Gegenständen entsprechendes Cluster mit vielen Elementen.

In den Schritten S26 bis S32 werden entsprechende Operationen für die Komponenten der Relativgeschwindigkeit in der zweiten Bezugsrichtung Y und die dazu komplementären Komponenten der Relativposition in der ersten Bezugsrichtung X durchgeführt (vgl. Fig. 6B und 7B).

Der zweite Proportionalitätskoeffizient $a_y$, welcher der Winkelgeschwindigkeit ω der ortsfesten Gegenstände entspricht, und die zweite Konstante $b_y$, die dem Translationsanteil $U_y$ der gemeinsamen Relativgeschwindigkeit der ortsfesten Gegenstände in der zweiten Bezugsrichtung Y entspricht, werden durch Mittelwertbildung über die ersten bzw. zweiten paarspezifischen Parameter der paarspezifischen Parameterpaare des Cluster mit den meisten Elementen oder alternativ durch lineare Regression wie oben beschrieben, berechnet.

Da der negative erste und der zweite Proportionalitätskoeffizient im Allgemeinen nicht gleich sein müssen, wird die Winkelgeschwindigkeit der ortsfesten Gegenstände in dem Fahrzeugkoordinatensystem als Mittelwert des negativen ersten Proportionalitätskoeffizienten und des zweite Proportionalitätskoeffizienten ermittelt.

Die Eigenrotationsgeschwindigkeit und die Eigenbahngeschwindigkeit werden wie bei der zweiten Ausführungsform ermittelt.

Das Verfahren wird dann mit Schritt S18 fortgesetzt.

Bei einer vierten alternativen Ausführungsform des erfindungsgemäßen Verfahrens wird im Unterschied zu dem Verfahren nach der dritten bevorzugten Ausführungsform in Schritt S30 nur das größte Cluster bestimmt. Diese Verfahren eignet sich insbesondere zur Bestimmung der Eigenbewegung in Situationen, in denen eine Bewegung von Gegenständen mit gleicher Geschwindigkeit in gleicher Richtung nicht auftritt oder sich nur im Vergleich zu der Anzahl der ortsfesten Gegenstände wenige Gegenstände derart bewegen.

**Bezugszeichenliste**

| | |
|---|---|
| 10 | Fahrzeug |
| 12 | Laserscanner |
| 14 | Sichtbereich |
| 16 | Lastkraftwagen |
| 18 | Lastkraftwagen |
| 20 | Pfahl |
| 22 | Pfahl |
| 24 | Pfahl |
| 26 | Pfahl |
| 28 | Pfahl |
| 30 | Pfahl |
| 32 | Strahlungsbündel |
| 34 | Gegenstandsbereiche |
| 36 | Gegenstandsbereiche |
| 38 | Datenverarbeitungseinrichtung |
| 40 | Cluster |

**Patentansprüche**

1. Verfahren zur Bestimmung einer Eigenbewegung eines sich bewegenden Fahrzeugs (10) in einer ersten Ebene auf der Basis von wenigstens zwei Datensätzen ($v_{ix}$, $v_{iy}$, $s_{ix}$, $s_{iy}$),

- die wenigstens zwei Gegenständen (16, 18, 20, 22, 24, 26, 28, 30) oder zwei Gegenstandsbereichen eines Gegenstands in einem Erfassungsbereich (14) eines mit dem Fahrzeug (10) mitbewegten Sensors (12) für elektromagnetische Strahlung zugeordnet sind, und

- die mittels des Sensors (12) ermittelte Daten in Bezug auf eine dem jeweiligen Gegenstand (16, 18, 20, 22, 24, 26, 28, 30) bzw. dem jeweiligen Gegenstandsbereich zugeordnete Relativgeschwindigkeit ($v_i$) und -position ($s_i$) in einer zweiten zu der ersten Ebene parallelen oder mit einem Winkel von weniger als 90° geneigten Ebene und relativ zu dem Fahrzeug (10) zu einem gegebenen Zeitpunkt enthalten,

bei dem

- für wenigstens eine vorgegebene, durch Relativbewegungsparameter ($a_x$, $b_x$, $a_y$, $b_y$) parametrisierbare Modellbeziehung, mittels derer für verschiedene Eigenbewegungen des Fahrzeugs (10) durch Wahl der Relativbewegungsparameter eine lineare Abhängigkeit einer Komponente der Relativgeschwindigkeit in einer ersten Bezugsrichtung von der komplementären Komponente der Relativposition in einer zweiten Bezugsrichtung, die beliebigen ortsfesten Gegenständen (20, 22, 24, 26, 28, 30) bzw. alle Gegenstandsbereiche des ortsfesten Gegenstands zugeordnet sind, wiedergebbar ist, anhand der den ortsfesten Gegenständen (20, 22, 24, 26, 28, 30) den zwei Gegenstandsbereichen des ortsfesten Gegenstands zugeordneten Datensätze Werte der Relativbewegungsparameter so bestimmt werden,

dass für alle ortsfesten Gegenstände (20, 22, 24, 26, 28, 30) bzw. alle Gegenstandsbereiche des ortsfesten Gegenstands

eine gemeinsam lineare Abhängigkeit einer Komponente der Relativgeschwindigkeit in einer ersten Bezugsrichtung von der komplementären Komponente der Relativposition in einer zweiten Bezugsrichtung, die den ortsfesten Gegenständen (20, 22, 24, 26, 28, 30) bzw. den Gegenstandsbereichen des ortsfesten Gegenstands zugeordnet sind, wiedergegeben wird, und

- aus den Relativbewegungsparametern eine Eigenrotationsgeschwindigkeit ($\omega^G$) und/oder wenigstens eine Komponente einer Eigenbahngeschwindigkeit ($v_{10}^G$) des Fahrzeugs (10) ermittelt werden.

2. Verfahren nach Anspruch 1,
**dadurch gekennzeichnet,**
**dass** zur Bestimmung der ortsfesten Gegenstände (20, 22, 24, 26, 28, 30) eine größte Gruppe von Datensätzen ermittelt wird, für die eine Abhängigkeit zwischen den den jeweiligen Gegenständen (20, 22, 24, 26, 28, 30) zugeordneten Relativgeschwindigkeiten und entsprechenden Relativpositionen durch die wenigstens eine Modellbeziehung und dieser Gruppe zugeordnete Relativbewegungsparameter wenigstens mit einer vorgegebenen Genauigkeit approximierbar ist, und
**dass** aus den der ermittelten, den ortsfesten Gegenständen entsprechenden Gruppe zugeordneten Relativbewegungsparametern die Eigenrotationsgeschwindigkeit und/oder die wenigstens eine Komponente der Eigenbahngeschwindigkeit des Fahrzeugs (10) ermittelt werden.

3. Verfahren nach Anspruch 1,
**dadurch gekennzeichnet,**
**dass** zur Bestimmung der ortsfesten Gegenstände (20, 22, 24, 26, 28, 30) Gruppen von Datensätzen ermittelt werden, für die eine Abhängigkeit zwischen den den jeweiligen Gegenständen (20, 22, 24, 26, 28, 30) zugeordneten Relativgeschwindigkeiten und entsprechenden Relativpositionen durch die wenigstens eine Modellbeziehung und dieser Gruppe zugeordnete Relativbewegungsparameter wenigstens mit einer vorgegebenen Genauigkeit approximierbar ist, dass, wenn mehr als eine Gruppe ermittelt wird, unter diesen Gruppen anhand wenigstens eines vorgegebenen Kriteriums eine den ortsfesten Gegenständen entsprechende Gruppe ermittelt wird, während sonst die einzige ermittelte Gruppe als ortsfesten Gegenständen entsprechend angesehen wird, und
**dass** aus den der ermittelten, den ortsfesten Gegenständen entsprechenden Gruppe zugeordneten Relativbewegungsparametern die Eigenrotationsgeschwindigkeit und/oder die wenigstens eine Komponente der Eigenbahngeschwindigkeit des Fahrzeugs (10) ermittelt werden.

4. Verfahren nach Anspruch 3,
**dadurch gekennzeichnet,**
**dass** das Verfahren zyklisch wiederholt wird, und
**dass** in verschiedenen Zyklen unterschiedliche Kriterien verwendet werden.

5. Verfahren nach Anspruch 3 oder 4,
**dadurch gekennzeichnet,**
**dass** das Verfahren zyklisch wiederholt wird, und
**dass** als Kriterium verwendet wird, dass sich die Relativbewegungsparameter der Gruppe in einem aktuellen Zyklus, die ortsfesten Gegenständen entspricht, höchstens um für die jeweiligen Relativbewegungsparameter vorgegebene Beträge von den entsprechenden Relativbewegungsparametern der in einem vorhergehenden Zyklus ortsfesten Gegenständen entsprechenden Gruppe unterscheiden.

6. Verfahren nach einem der Ansprüche 3 bis 5,
   **dadurch gekennzeichnet,**
   **dass** mittels entsprechender Fahrzeugsensoren Daten über einen Fahrzustand des Fahrzeugs (10) ermittelt werden, und
   **dass** als Kriterium verwendet wird, dass Relativbewegungsparameter der Gruppe von Datensätzen, die ortsfesten Gegenständen entspricht, innerhalb vorgegebener Toleranzen mit den mittels des Fahrzeugsensors ermittelten Daten über den Fahrzustand des Fahrzeugs (10) konsistent sind.

7. Verfahren nach einem der Ansprüche 3 bis 6,
   **dadurch gekennzeichnet,**
   **dass** zusätzlich zu dem wenigstens einen Kriterium als weiteres Kriterium verwendet wird, dass die Anzahl der Datensätze in der ortsfesten Gegenständen entsprechenden Gruppe größer ist als in allen anderen Gruppen, die das wenigstens eine Kriterium erfüllen.

8. Verfahren nach einem der vorhergehenden Ansprüche,
   **dadurch gekennzeichnet,**
   **dass** die Relativbewegungsparameter unter Verwendung eines Maximum-Likelihood-Schätzverfahrens bestimmt werden.

9. Verfahren nach einem der vorhergehenden Ansprüche,
   **dadurch gekennzeichnet,**
   **dass** eine Modellbeziehung verwendet wird, mittels derer eine Abhängigkeit zwischen einer Komponente der Relativgeschwindigkeit der ortsfesten Gegenstände (20, 22, 24, 26, 28, 30) entlang einer ersten Bezugsrichtung und einer entsprechenden Komponente der Relativposition entlang einer zweiten, zu der ersten orthogonalen Bezugsrichtung wiedergebbar ist.

10. Verfahren nach einem der Ansprüche 2 bis 9,
    **dadurch gekennzeichnet,**
    **dass** bei der Bestimmung der ortsfesten Gegenstände (20, 22, 24, 26, 28, 30) Gruppen von Datensätzen ermittelt werden, für die ein Zusammenhang zwischen einer Komponente der Relativgeschwindigkeit der entsprechenden Gegenstände entlang einer ersten Bezugsrichtung und einer entsprechenden Komponente der Relativposition entlang einer zweiten, zu der ersten orthogonalen Bezugsrichtung durch eine dieser Gruppe zugeordnete, durch zwei Relativbewegungsparameter parametrisierte lineare Funktion mit der vorgegebenen Genauigkeit approximierbar ist, und
    **dass** aus den Relativbewegungsparametern, die der ortsfesten Gegenständen entsprechenden Gruppe zugeordnet sind, die Eigenrotationsgeschwindigkeit und/ oder wenigstens eine Komponente der Eigenbahngeschwindigkeit des Fahrzeugs (10) entlang der ersten Bezugsrichtung ermittelt werden.

11. Verfahren nach Anspruch 9 oder 10,
    **dadurch gekennzeichnet,**
    **dass** bei der Ermittlung der ortsfesten Gegenstände Gruppen von Datensätzen ermittelt werden, für die ein Zusammenhang zwischen einer Komponente der Relativgeschwindigkeit der entsprechenden Gegenstände entlang einer ersten Bezugsrichtung und einer entsprechenden Komponente der Relativposition entlang einer zweiten, zu der ersten orthogonalen Bezugsrichtung durch eine dieser Gruppe zugeordnete lineare, durch zwei Relativbewegungsparameter parametrisierte Funktion und zusätzlich ein weiterer Zusammenhang zwischen einer Komponente der Relativgeschwindigkeit der entsprechenden Gegenstände entlang der zweiten Bezugsrichtung und einer Komponente der Relativposition entlang der ersten Bezugsrichtung durch eine dieser Gruppe zugeordnete weitere lineare, durch zwei weitere Relativbewegungsparameter parametrisierte Funktion mit einer vorgegebenen Genauigkeit approximierbar ist, und **dass** wenigstens die Eigenrotationsgeschwindigkeit und/oder eine Komponente der Eigenbahngeschwindigkeit des Fahrzeugs (10) entlang der entsprechenden Bezugsrichtung aus zwei Relativbewegungsparametern, die eine der linearen Funktionen, die der ortsfesten Gegenständen entsprechenden Gruppe zugeordnet sind, parametrisieren, ermittelt werden.

12. Verfahren nach einem der Ansprüche 9 bis 11,

**dadurch gekennzeichnet,**
**dass** der erste Relativbewegungsparameter ein Proportionalitätskoeffizient für die lineare Funktion ist, aus dem die Eigenrotationsgeschwindigkeit bestimmbar ist, und
**dass** der zweite Relativbewegungsparameter eine Konstante ist, aus der die Komponente der Eigenbahngeschwindigkeit entlang der ersten Bezugsrichtung bestimmbar ist.

13. Verfahren nach einem der Ansprüche 9 bis 12,
**dadurch gekennzeichnet,**
**dass** die Gruppen von Datensätzen und die Relativbewegungsparameter durch Verwendung einer Hough-Transformation ermittelt werden.

14. Verfahren nach einem der Ansprüche 9 bis 13,
**dadurch gekennzeichnet,**
**dass** die Gruppen von Datensätzen **dadurch** ermittelt werden, dass

- für alle Paare von Datensätzen aus den jeweiligen Komponenten der Relativgeschwindigkeiten entlang der einen Bezugsrichtung und die entsprechenden Komponenten der Relativpositionen entlang der anderen Bezugsrichtung Werte von zwei paarspezifischen Parametern, die eine für das Paar spezifische lineare paarspezifische Funktion bestimmen, ermittelt werden, wobei die lineare paarspezifische Funktion den Zusammenhang zwischen den jeweiligen Komponenten der Relativgeschwindigkeit entlang der einen Bezugsrichtung und den entsprechenden Komponenten der Relativposition entlang der anderen Bezugsrichtung wiedergibt,
- **dass** aus der Menge der so gebildeten Wertepaare für die paarspezifischen Parameter Cluster ähnlicher Wertepaare gebildet werden, wobei jedes Cluster einer Gruppe von Datensätzen entspricht, und
- **dass** für jedes Cluster ein erster und ein zweiter Relativbewegungsparameter aus den Datensätzen von Gegenständen (20, 22, 24, 26, 28, 30) ermittelt werden, die Wertepaaren in dem Cluster zugeordnet sind.

15. Verfahren nach Anspruch 14
**dadurch gekennzeichnet,**
**dass** der erste und der zweite paarspezifische Parameter ein Proportionalitätskoeffizient und eine Konstante sind, die die lineare paarspezifische Funktion parametrisieren.

16. Verfahren nach einem der vorhergehenden Ansprüche,
**dadurch gekennzeichnet,**
**dass** es zyklisch wiederholt durchgeführt wird, und
**dass** bei der Ermittlung der ortsfesten Gegenstände und/oder der Relativbewegungsparameter Ergebnisse der Ermittlung der ortsfesten Gegenstände und/oder der Relativbewegungsparameter in wenigstens einem vorhergehenden Zyklus verwendet werden.

17. Verfahren nach einem der vorhergehenden Ansprüche,
**dadurch gekennzeichnet,**
**dass** mit dem Sensor (12) Rohdaten erfasst werden, und
**dass** als Daten die Rohdaten des Sensors (12) verwendet werden.

18. Verfahren nach einem der vorhergehenden Ansprüche,
**dadurch gekennzeichnet,**
**dass** mit dem Sensor (12) Rohdaten erfasst werden,
**dass** unter Verwendung der Rohdaten eine Objektverfolgung durchgeführt wird, und
**dass** als Daten Relativgeschwindigkeiten und Relativpositionen von verfolgten Objekten verwendet werden.

19. Verfahren nach einem der vorhergehenden Ansprüche,
**dadurch gekennzeichnet,**
**dass** mittels entsprechender Sensoren Daten über einen Fahrzustand des Fahrzeugs (10) ermittelt werden und dass die Daten zur Bestimmung der ortsfesten Gegenstände und/oder der Bestimmung der Eigenrotationsgeschwindigkeit und/oder der Eigenbahngeschwindigkeit des Fahrzeugs (10) verwendet werden.

20. Verfahren nach einem der vorhergehenden Ansprüche,
**dadurch gekennzeichnet,**
**dass** die Daten unter Verwendung eines Laserscanners ermittelt werden.

**21.** Verfahren nach einem der vorhergehenden Ansprüche,
**dadurch gekennzeichnet,**
**dass** die Daten unter Verwendung einer Stereo-Videokamera ermittelt werden.

**22.** Verfahren nach einem der vorhergehenden Ansprüche,
**dadurch gekennzeichnet,**
**dass** die Daten unter Verwendung eines Radarsensors ermittelt werden.

**23.** Verfahren nach einem der vorhergehenden Ansprüche,
**dadurch gekennzeichnet,**
**dass** es in Verbindung mit einem Verfahren zur Objekterkennung und -verfolgung verwendet wird, und
**dass** die ermittelten Informationen über ortsfeste Gegenstände bei einer Objektklassifizierung verwendet werden.

**24.** Computerprogramm mit Programmcode-Mitteln, um das Verfahren nach einem der Ansprüche 1 bis 23 durchzuführen, wenn das Programm auf einem Computer (38) ausgeführt wird.

**25.** Computerprogrammprodukt mit Programmcode-Mitteln, die auf einem computerlesbaren Datenträger gespeichert sind, um das Verfahren nach einem der Ansprüche 1 bis 23 durchzuführen, wenn das Computerprogrammprodukt auf einem Computer (38) ausgeführt wird.

**Claims**

**1.** A method for determining a movement of a moving vehicle (10) in a first plane on the basis of at least two data sets $(V_{ix}, V_{iy}, S_{ix}, S_{iy})$

- which are associated with at least two objects (16, 18, 20, 22, 24, 26, 28, 30) or two object ranges of an object in a detection region (14) of a sensor (12) for electromagnetic radiation moved with the vehicle (10) and
- which contain data determined by means of the sensor (12) with respect to a relative speed $(v_i)$ and relative position $(s_i)$ associated with the respective object (16, 18, 20, 22, 24, 26, 28, 30) or the respective object range in a second plane parallel to the first plane or inclined at an angle of less than 90° thereto and relative to the vehicle (10) at a given time,
wherein
- values of the relative movement parameters are determined for at least one preset model relationship which is parameterisable by relative movement parameters $(a_x, b_x, a_y, b_y)$ and by means of which, by selection of the relative movement parameters, a linear dependence of a component of the relative speed in a first reference direction on the complementary component of the relative position in a second reference direction can be reproduced for different movements of the vehicle (10), said relative speed and relative position being associated with any desired stationary objects (20, 22, 24, 26, 28, 30) or any desired object ranges of the stationary object, said values being determined with reference to the data sets associated with the stationary objects (20, 22, 24, 26, 28, 30) or two object ranges of the stationary object such that a linear dependence of a component of the relative speed in a first reference direction on the complementary component of the relative position in a second reference direction is reproduced for all stationary objects (20, 22, 24, 26, 28, 30) or for all object ranges of the stationary object together, said relative speed and relative position being associated with the stationary objects (20, 22, 24, 26, 28, 30) or the object ranges of the stationary object; and
- a speed of rotation $(\omega^G)$ and/ or at least one component of a path speed $(v_{10}{}^G)$ of the vehicle (10) are determined from the relative movement parameters.

**2.** A method in accordance with claim 1,
**characterised in that**
a largest group of data sets is determined for the determination of the stationary objects (20, 22, 24, 26, 28, 30), for which largest group of data sets a dependence can be approximated with at least one preset precision between the relative speeds associated with the respective objects (20, 22, 24, 26, 28, 30) and corresponding relative positions by the at least one model relationship and relative movement parameters associated with this group; and
**in that** the speed of rotation and/or the at least one component of the path speed of the vehicle (10) are determined from the relative movement parameters associated with the determined group corresponding to the stationary objects.

**3.** A method in accordance with claim 1,

**characterised in that**

groups of data sets are determined for the determination of the stationary objects (20, 22, 24, 26, 28, 30), for which groups of data sets a dependence can be approximated with at least one preset precision between the relative speeds associated with the respective objects (20, 22, 24, 26, 28, 30) and corresponding relative positions by the at least one model relationship and relative movement parameters associated with this group;

**in that**, if more than one group is determined, a group corresponding to the stationary objects is determined among these groups with reference to at least one preset criterion, whereas otherwise the only determined group is considered as corresponding to the stationary objects.

**in that** the speed of rotation and/or the at least one component of the path speed of the vehicle (10) are determined from the relative movement parameters associated with the determined group corresponding to the stationary objects.

4. A method in accordance with claim 3,
   **characterised in that**
   the method is repeated cyclically; and
   **in that** different criteria are used in different cycles.

5. A method in accordance with claim 3 or claim 4,
   **characterised in that**
   the method is repeated cyclically; and
   **in that** it is used as a criterion that the relative movement parameters of the group in a current cycle corresponding to stationary objects differ at most by amounts predetermined for the respective relative movement parameters from the corresponding relative movement parameters of the group corresponding to stationary objects in a preceding cycle.

6. A method in accordance with any one of the claims 3 to 5,
   **characterised in that**
   data on a travel state of the vehicle (10) are determined by means of corresponding vehicle sensors; and
   **in that** it is used as a criterion that relative movement parameters of the group of data sets corresponding to stationary objects are consistent within preset tolerances with the data on the travel state of the vehicle (10) determined by means of the vehicle sensor.

7. A method in accordance with any one of the claims 3 to 6,
   **characterised in that**
   it is determined as a further criterion, in addition to the at least one criterion, that the number of the data sets in the group corresponding to stationary objects is larger than in all other groups which satisfy the at least one criterion.

8. A method in accordance with any one of the preceding claims,
   **characterised in that**
   the relative movement parameters are determined using a maximum likelihood estimation method.

9. A method in accordance with any one of the preceding claims,
   **characterised in that**
   a model relationship is used by means of which a dependence can be reproduced between a component of the relative speed of the stationary objects (20, 22, 24, 26, 28, 30) along a first reference direction and a corresponding component of the relative position along a second reference direction orthogonal to the first reference direction

10. A method in accordance with any one of the claims 2 to 9,
    **characterised in that**,
    in the determination of the stationary objects (20, 22, 24, 26, 28,30), groups of data sets are determined for which a correlation between a component of the relative speed of the corresponding objects along a first reference direction and a corresponding component of the relative position along a second reference direction orthogonal to the first reference direction can be approximated with the preset precision by a linear function associated with this group and parameterised by two relative movement parameters; and
    **in that** the speed of rotation and/or at least one component of the path movement of the vehicle (10) along the first reference directions are determined are determined from the relative movement parameters which are associated with the group corresponding to stationary objects.

11. A method in accordance with claim 9 or claim 10,

**characterised in that**,
in the determination of the stationary objects, groups of data sets are determined for which a correlation can be approximated with a preset precision between a component of the relative speed of the corresponding objects along a first reference direction and a corresponding component of the relative position along a second reference direction orthogonal to the first reference direction by a linear function associated with this group and parameterisable by two relative movement parameters and additionally a further correlation between a component of the relative speed of the corresponding objects along the second reference direction and a component of the relative position along the first reference direction can be approximated with a preset precision by a further linear function associated with this group and parameterised by two further relative movement parameters; and
**in that** at least the speed of rotation and/or a component of the path speed of the vehicle (10) along the corresponding reference direction are determined from two relative movement parameters which parameterise one of the linear functions which are associated with the group corresponding to stationary objects.

**12.** A method in accordance with any one of the claims 9 to 11,
**characterised in that**
the first relative movement parameter is a proportionality coefficient for the linear function and the speed of rotation can be determined from said proportionality coefficient; and
**in that** the second relative movement parameter is a constant from which the component of the path speed along the first reference direction can be determined.

**13.** A method in accordance with any one of the claims 9 to 12,
**characterised in that**
the group of data sets and the relative movement parameters are determined by use of a Hough transformation.

**14.** A method in accordance with any one of the claims 9 to 13,
**characterised in that**
the groups of data sets are determined **in that**

- values of two pair-specific parameters which determine a specific linear function specific to the pair for the pair are determined for all pairs of data sets from the respective components of the relative speeds along the one reference direction and the corresponding components of the relative positions along the other reference direction, wherein the linear pair-specific function reproduces the correlation between the respective components of the relative speed along the one reference direction and the corresponding components of the relative position along the other reference direction;
- **in that** clusters of similar value pairs are formed from the set of value pairs for the pair-specific parameters determined in this manner, with each cluster corresponding to a group of data sets; and
- **in that** a first and a second relative movement parameter are determined for each cluster from the data sets of objects (20, 22, 24, 26, 28, 30) which are associated with value pairs in the cluster.

**15.** A method in accordance with claim 14
**characterised in that**
the first and the second pair-specific parameters are a proportionality coefficient and a constant which parameterise the linear pair-specific function.

**16.** A method in accordance with any one of the preceding claims,
**characterised in that**
it is carried out cyclically repeatedly; and
**in that** results of the determination of the stationary objects and/or of the relative movement parameters in at least one preceding cycle are used in the determination of the stationary objects and/or of the relative movement parameters.

**17.** A method in accordance with any one of the preceding claims,
**characterised in that**
raw data are detected using the sensor (12); and
**in that** the raw data of the sensor (12) are used as the data.

**18.** A method in accordance with any one of the preceding claims,
**characterised in that**

raw data are detected using the sensor (12);
**in that** an object tracking is carried out using the raw data; and **in that** relative speeds and relative positions of tracked objects are used as the data.

19. A method in accordance with any one of the preceding claims,
**characterised in that**
data on a travel state of the vehicle (10) are determined by means of corresponding sensors; and **in that** the data are used for the determination of the stationary objects and/or for the determination of the rotary speed and/or of the path speed of the vehicle (10).

20. A method in accordance with any one of the preceding claims,
**characterised in that**
the data are determined using a laser scanner.

21. A method in accordance with any one of the preceding claims,
**characterised in that**
the date are determined using a stereo video camera.

22. A method in accordance with any one of the preceding claims,
**characterised in that**
the data are determined using a radar sensor.

23. A method in accordance with any one of the preceding claims,
**characterised in that**
it is used in conjunction with a method for object recognition and object tracking; and
**in that** the determined information on stationary objects is used in an object classification.

24. A computer program with program code means to carry out the method in accordance with any one of the claims 1 to 23 when the program is installed on a computer (38).

25. A computer program product with program code means which are stored on a computer readable data carrier to carry out the method in accordance with any one of the claims 1 to 23 when the computer program product is installed on a computer (38).

**Revendications**

1. Procédé pour déterminer un mouvement propre d'un véhicule en déplacement (10) dans un premier plan en se basant sur au moins deux jeux de données ($V_{ix}$, $V_{iy}$, $S_{ix}$, $S_{iy}$),

- qui sont associés à au moins deux objets (16, 18, 20, 22, 24, 26, 28, 30) ou à deux zones d'objet d'un objet dans une région de détection (14) d'un capteur (12), déplacé conjointement avec le véhicule (10), pour un rayonnement électromagnétique, et
- qui contiennent des données, déterminées au moyen du capteur (12), qui se réfèrent à une vitesse relative ($v_i$) et à une position relative ($s_i$) associées à un objet respectif (16, 18, 20, 22, 24, 26, 28, 30) ou à la zone d'objet respective dans un second plan parallèle au premier plan ou incliné avec un angle de moins de 90° et relativement au véhicule (10) à un instant donné,
dans lequel
- pour au moins une équation de modélisation prédéterminée, susceptible d'être paramétrée par des paramètres de mouvement relatif ($a_x$, $b_x$, $a_y$, $b_y$) et au moyen de laquelle il est possible de reproduire une dépendance linéaire, pour différents mouvements propres du véhicule (10) par choix des paramètres de mouvements relatifs, d'une composante de la vitesse relative dans une première direction de référence à partir de la composante complémentaire de la position relative dans une seconde direction de référence, qui sont associées à des objets stationnaires quelconques (16, 18, 20, 22, 24, 26, 28, 30) ou à des zones d'objet quelconques de l'objet stationnaire, au moyen des jeux de données associés aux objets stationnaires (16, 18, 20, 22, 24, 26, 28, 30) ou à deux zones de l'objet stationnaire, on détermine des valeurs des paramètres de mouvement relatif de telle façon que pour tous les objets stationnaires (16, 18, 20, 22, 24, 26, 28, 30) ou pour toutes les zones de l'objet stationnaire, on reproduit conjointement une dépendance linéaire d'une composante de la vitesse relative dans une première direction de référence à partir de la composante complémentaire de la position relative dans une seconde direction de référence, qui sont associées aux objets stationnaires (16, 18, 20, 22, 24, 26, 28, 30) ou aux zones de l'objet stationnaire, et

- à partir des paramètres de mouvement relatif, on détermine une vitesse de rotation propre ($\omega^G$) et/ou au moins une composante d'une vitesse de trajectoire propre ($v_{10}^G$) du véhicule (10).

2. Procédé selon la revendication 1,
   **caractérisé en ce que**
   pour la détermination des objets stationnaires (20, 22, 24, 26, 28, 30) on détermine un plus grand groupe de jeux de données pour lesquels il est possible d'établir approximativement, au moins avec une exactitude prédéterminée, une dépendance entre les vitesses relatives associées aux objets respectifs (20, 22, 24, 26, 28, 30) et des positions relatives correspondantes par ladite au moins une équation de modélisation et les paramètres de mouvements relatifs associés à ce groupe, et
   à partir des paramètres de mouvements relatifs associés au groupe déterminé correspondant aux objets stationnaires, on détermine la vitesse de rotation propre et/ou ladite au moins une composante de la vitesse de trajectoire propre du véhicule (10).

3. Procédé selon la revendication 1,
   **caractérisé en ce que**
   pour la détermination des objets stationnaires (20, 22, 24, 26, 28, 30), on détermine des groupes de jeux de données pour lesquels il est possible d'établir approximativement, au moins avec une exactitude prédéterminée, une dépendance entre les vitesses relatives associées aux objets respectifs (20, 22, 24, 26, 28, 30) et des positions relatives correspondantes par ladite au moins une équation de modélisation et les paramètres de mouvements relatifs associés à ce groupe,
   si l'on détermine plus d'un groupe, on détermine parmi ces groupes, en s'aidant d'au moins un critère prédéterminé, un groupe correspondant aux objets stationnaires, tandis que sinon le groupe unique déterminé est considéré comme correspondant à des objets stationnaires, et
   à partir des paramètres de mouvements relatifs associés au groupe déterminé correspondant aux objets stationnaires, on détermine la vitesse de rotation propre et/ou ladite au moins une composante de la vitesse de trajectoire propre du véhicule (10).

4. Procédé selon la revendication 3,
   **caractérisé en ce que** le procédé est répété de manière cyclique, et
   **en ce que** l'on utilise des critères différents dans des cycles différents.

5. Procédé selon la revendication 3 ou 4,
   **caractérisé en ce que** le procédé est répété de manière cyclique, et
   **en ce que** l'on utilise comme critère le fait que les paramètres de mouvements relatifs du groupe dans un cycle actuel, qui correspond à des objets stationnaires, diffèrent tout au plus de valeurs prédéterminées pour les paramètres de mouvements relatifs respectifs vis-à-vis des paramètres de mouvements relatifs correspondants du groupe correspondant à des objets stationnaires dans un cycle précédent.

6. Procédé selon l'une des revendications 3 à 5,
   **caractérisé en ce que**
   au moyen de capteurs correspondants dans le véhicule on détermine des données concernant une situation de conduite du véhicule (10), et on utilise comme critère le fait que des paramètres de mouvements relatifs du groupe de jeux de données qui correspondent à des objets stationnaires sont homogènes, à l'intérieur de tolérances prédéterminées, avec les données, déterminées au moyen du capteur dans le véhicule concernant la situation de conduite du véhicule (10).

7. Procédé selon l'une des revendications 3 à 6,
   **caractérisé en ce que**, en plus dudit au moins un critère, on utilise comme autre critère que le nombre des jeux de données dans le groupe correspondant à des objets stationnaires est plus grand que dans tous les autres groupes qui satisfont ledit au moins un critère.

8. Procédé selon l'une des revendications précédentes,
   **caractérisé en ce que** les paramètres de mouvements relatifs sont déterminés en utilisant un processus d'estimation à vraisemblance maximum.

**9.** Procédé selon l'une des revendications précédentes,
**caractérisée en ce que** l'on utilise une équation de modélisation au moyen de laquelle il est possible de reproduire une dépendance entre une composante de la vitesse relative des objets stationnaires (20, 22, 24, 26, 28, 30) le long d'une première direction de référence et une composante correspondante de la position relative le long d'une seconde direction de référence orthogonale à la première.

**10.** Procédé selon l'une des revendications 2 à 9,
**caractérisé en ce que** lors de la détermination des objets stationnaires (20, 22, 24, 26, 28, 30), on détermine des groupes de jeux de données pour lesquelles il est possible d'établir de façon approximative avec l'exactitude prédéterminée une dépendance entre une composante de la vitesse relative des objets correspondants le long d'une première direction de mouvement et une composante correspondante de la position relative le long d'une seconde direction de référence orthogonale à la première, par une fonction linéaire, associée à ce groupe, susceptible d'être paramétrée par deux paramètres de mouvements relatifs, et
à partir des paramètres de mouvements relatifs qui sont associés au groupe correspondant aux objets stationnaires, on détermine la vitesse de rotation propre et/ou au moins une composante de la vitesse de trajectoire propre du véhicule (10) le long de la première direction de référence.

**11.** Procédé selon la revendication 9 ou 10,
**caractérisé en ce que**, lors de la détermination des objets stationnaires, on détermine des groupes de jeux de données pour lesquels il est possible d'établir de façon approximative avec l'exactitude prédéterminée une dépendance entre une composante de la vitesse relative des objets correspondants le long d'une première direction de référence et une composante correspondante de la position relative le long d'une seconde direction de référence orthogonale à la première, par une fonction linéaire, associée à ce groupe, susceptible d'être paramétrée par deux paramètres de mouvement linéaire, et additionnellement une autre dépendance entre une composante de la vitesse relative des objets correspondants le long de la seconde direction de référence et une composante de la position relative le long de la première direction de référence par une autre fonction linéaire, associée à ce groupe, susceptible d'être paramétrée par deux autres paramètres de mouvements relatifs, et
**en ce que** l'on détermine au moins une vitesse de rotation propre et/ou une composante de la vitesse de trajectoire propre du véhicule (10) le long de la direction de référence correspondante à partir de deux paramètres de mouvements relatifs qui paramètrent l'une des fonctions linéaires qui sont associées au groupe correspondant aux objets stationnaires.

**12.** Procédé selon l'une des revendications 9 à 11,
**caractérisé en ce que** le premier paramètre de mouvement relatif est un coefficient de proportionnalité pour la fonction linéaire à partir de laquelle il est possible de déterminer la vitesse de rotation propre, et
**en ce que** le second paramètre de mouvement relatif est une constante à partir de laquelle il est possible de déterminer la composante de la vitesse de trajectoire propre le long de la première direction de référence.

**13.** Procédé selon l'une des revendications 9 à 12,
**caractérisé en ce que** les groupes de jeux de données et les paramètres de mouvements relatifs sont déterminés en utilisant une transformation de Hough.

**14.** Procédé selon l'une des revendications 9 à 13,
**caractérisé en ce que** les groupes de jeux de données sont déterminés de telle façon que

- pour toutes les paires de jeux de données, on détermine à partir des composantes respectives des vitesses relatives le long d'une direction de référence et des composantes correspondantes des positions relatives le long de l'autre direction de référence, des valeurs de deux paramètres spécifiques en paire, qui déterminent une fonction linéaire spécifique pour ladite paire, de sorte que la fonction linéaire spécifique pour la paire reproduit la dépendance entre les composantes respectives de la vitesse relative le long de l'une des directions de référence et les composantes correspondantes de la position relative le long de l'autre direction de référence,
- à partir de l'ensemble des paires de valeurs ainsi formées on forme pour les paramètres spécifiques par paire des amas de paires de valeurs analogues, de manière que chaque amas correspond à un groupe de j eux de données, et
- pour chaque amas on détermine un premier paramètre de mouvement relatif et un second paramètre de mouvement relatif à partir des jeux de données d'objets (20, 22, 24, 26, 28, 30) qui sont associés à des paires de valeurs dans l'amas.

**15.** Procédé selon la revendication 14,
**caractérisé en ce que** le premier et le second paramètre spécifique par paire sont un coefficient de proportionnalité et une constante, qui paramètrent la fonction linéaire spécifique à la paire.

**16.** Procédé selon l'une des revendications précédentes,
**caractérisé en ce que**
il est exécuté de façon répétée de manière cyclique, et
lors de la détermination des objets stationnaires et/ou des paramètres de mouvements relatifs, on utilise des événements de la détermination des objets stationnaires et/ou des paramètres de mouvements relatifs dans au moins un cycle précédent.

**17.** Procédé selon l'une des revendications précédentes,
**caractérisé en ce que** l'on détecte au moyen du capteur (12) des données brutes, et **en ce que** l'on utilise à titre de données les données brutes du capteur (12).

**18.** Procédé selon l'une des revendications précédentes,
**caractérisé en ce que** l'on détecte au moyen du capteur (12) des données brutes,
en utilisant les données brutes on exécute une poursuite des objets, et
on utilise comme données des vitesses relatives des positions relatives des objets poursuivis.

**19.** Procédé selon l'une des revendications précédentes,
**caractérisé en ce que** l'on détecte, au moyen de capteurs correspondants, des données relatives à un état de circulation du véhicule (10), et **en ce que** les données sont utilisées pour la détermination des objets stationnaires et/ou la détermination de la vitesse de rotation propre et/ou la vitesse de trajectoire propre du véhicule (10).

**20.** Procédé selon l'une des revendications précédentes,
**caractérisé en ce que** les données sont déterminées en utilisant un scanneur à laser.

**21.** Procédé selon l'une des revendications précédentes,
**caractérisé en ce que** les données sont déterminées en utilisant une caméra vidéo stéréo.

**22.** Procédé selon l'une des revendications précédentes,
**caractérisé en ce que** les données sont déterminées en utilisant un capteur radar.

**23.** Procédé selon l'une des revendications précédentes,
**caractérisé en ce qu'**il est utilisé en association avec un procédé pour la reconnaissance et la poursuite d'objets, et **en ce que** les informations déterminées sur les objets stationnaires sont utilisées lors d'une classification d'objets.

**24.** Programme d'ordinateur comprenant des moyens de code de programme pour mettre en oeuvre le procédé selon l'une des revendications 1 à 23 lorsque le programme est exécuté sur un ordinateur (38).

**25.** Produit de programme d'ordinateur comprenant des moyens de code de programme qui sont mémorisés sur un support de données lisible à l'ordinateur, pour mettre en oeuvre le procédé selon l'une des revendications 1 à 23 quand le produit de programme d'ordinateur est exécuté sur un ordinateur (38).

Fig. 1

Fig. 2A

Fig. 2B

S10 — Abtasten des Sichtbereichs und Erfassung von Sensordaten

S12 — Umrechnung der Sensordaten des Laserscanners in das Fahrzeugkoordinatensystem

S14 — Objektverfolgung und Ermittlung von Relativpositionen und -geschwindigkeiten $s_i$ bzw. $v_i$ der Objekte i

S16 — Ermittlung der ortsfesten Gegenstände und einer Eigenrotations und Eigenbahngeschwindigkeit des Fahrzeugs

S18 — Speicherung/Ausgabe der Eigenrotationsgeschwindigkeit und der Eigenbahngeschwindigkeit sowie von den ortsfesten Gegenständen zugeordneten Kennungen

Fig. 3

S14

S20

Für alle Relativgeschwindigkeits-
/Relativpositionswerte $(v_x, s_y)$ bzw. $(v_y, s_x)$:
Bestimmung aller möglichen Wertepaare
der Hough-Parameter $h_1$ und $h_2$ und
Erhöhung des Zählers im Akkumulator

S22

Suche der Akkumulatorzelle mit dem
größten Zählerwert

S24

Bestimmung der Eigenrotations- und
Eigenbahngeschwindigkeit

S18

Fig. 4

S14

S26 — Für alle Paare von Relativgeschwindigkeits-/Relativpositionswerten ($v_{ix}$, $s_{iy}$) bzw. ($v_{iy}$, $s_{ix}$): Bestimmung der paarspezifischen Parameter

S28 — Bildung von Clustern in der Menge der Wertepaare für die paarspezifischen Parameter und Ermittlung entsprechender Relativbewegungsparameter

S30 — Bestimmung des größten Clusters, dessen Relativbewegungsparameter den Relativbewegungsparametern des ortsfesten Gegenständen entsprechenden Clusters im vorhergehenden Zyklus innerhalb vorgegebener Toleranzen entsprechen

S32 — Bestimmung der Eigenrotationsgeschwindigkeit und der Eigenbahngeschwindigkeit

S18

Fig. 5

Fig. 6A

Fig. 6B

Fig. 7'A

Fig. 7B

EP 1 418 444 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO O150154 A1
- US 5930739 A

- US 3069654 A

**In der Beschreibung aufgeführte Nicht-Patentliteratur**

- **Haberäcker, P.** Praxis der digitalen Bildverarbeitung und Musterkennung. Carl Hanser Verlag, 1995

- **Bräunl ; Thomas ; Feyer ; Stefan ; Rapf ; Wolfgang ; Reinhardt ; Michael.** Parallele Bildverarbeitung. Addison-Wesley, 1995, vol. IX, 205
- **Jähne ; Bernd.** Digitale Bildverarbeitung. Springer Verlag, 1991